# EUROPÄISCHE PATENTSCHRIFT

(11) **EP 2 310 234 B1**
(45) Veröffentlichungstag und Bekanntmachung des Hinweises auf die Patenterteilung: **03.09.2014**
(21) Anmeldenummer: 09780554.3
(22) Anmeldetag: 14.07.2009
(51) Int. Cl.: B60R 21/233, B60R 21/2338, B60R 21/207, B60R 21/237, B60R 21/231

(54) **FAHRZEUGSITZANORDNUNG UND GASSACKANORDNUNG FÜR EIN KRAFTFAHRZEUG SOWIE VERFAHREN ZUM SCHÜTZEN EINES FAHRZEUGINSASSEN**
VEHICLE SEAT ARRANGEMENT AND AIRBAG ARRANGEMENT FOR MOTOR VEHICLE AND METHOD FOR PROTECTING A VEHICLE OCCUPANT
ARRANGEMENT DE SIÈGE DE VÉHICULE ET ARRANGEMENT DE COUSSIN GONFLABLE POUR UN VÉHICULE AUTOMOBILE AINSI QUE PROCÉDÉ POUR PROTÉGER UN PASSAGER D UN VÉHICULE

(30) Priorität: 15.07.2008 DE 102008033714; 17.10.2008 DE 102008052479
(43) Veröffentlichungstag der Anmeldung: 20.04.2011
(73) Patentinhaber: Takata AG, 63743 Aschaffenburg (DE)
(72) Erfinder: BREUNINGER, Martin, 89233 Neu-Ulm (DE); WEYRICH, Christian, 89275 Elchingen (DE); SENDELBACH, Hans-Peter, 89250 Senden (DE); GEISELHART, Werner, 89160 Dornstadt (DE); KORTH, Mirko, 89075 Ulm (DE); KRAFT, Michael, 89075 Ulm (DE); MILLER, Edwin, 89075 Ulm (DE)
(74) Vertreter: Staroske, Sandro
(86) Internationale Anmeldenummer: PCT/EP2009/058973
(87) Internationale Veröffentlichungsnummer: WO 2010/007055

(56) Entgegenhaltungen:
- DE-A1- 19 950 702
- DE-A1-102006 014 381
- DE-U1- 20 017 919
- DE-U1- 20 306 153
- DE-U1- 20 307 535
- DE-U1-202005 021 200
- JP-A- 2004 189 187
- US-A1- 2004 232 666

## Beschreibung

Die vorliegende Erfindung betrifft eine Fahrzeugsitzanordnung für ein Kraftfahrzeug gemäß Anspruch 1 sowie ein Verfahren zum Schützen eines Fahrzeuginsassen gemäß Anspruch 15.

Es ist bekannt, in einen Fahrzeugsitz eines Kraftfahrzeuges einen Seitengassack zu integrieren, der sich bei einer Kollision des Fahrzeuges in den Raum zwischen dem Fahrzeugsitz und der Fahrzeugseitenstruktur hinein entfaltet.

Aus der DE 203 07 535 U1 ist eine in einen Fahrzeugsitz integrierte Airbageinheit bekannt, deren Airbag sich nach dem Aufblasen zwischen einem Rahmen des Fahrzeugsitzes und einem Fahrzeuginsassen erstreckt.

Zudem offenbart die gattungsbildende DE 199 50 702 A1 einen Fahrzeugsitz mit einer aufblasbaren Seitenwange. Die DE 200 17 919 U1 beschreibt einen in einen Fahrzeugsitz integrierten Gassack, der aus einem Spalt zwischen einem Verkleidungsteil und einer Polsterung des Fahrzeugsitzes austritt.

Darüber hinaus offenbart die DE 10 2006 014 381 A1 eine fahrzeugsitzintegrierte Airbageinheit, wobei die Airbageinheit unter Bildung eines Abdeckungsmoduls an einer Abdeckung des Fahrzeugsitzes befestigt ist.

Das von der Erfindung zu lösende Problem besteht darin, einen auf einfache Weise realisierbaren und effizienten Schutz für einen auf einem Fahrzeugsitz befindlichen Fahrzeuginsassen zu schaffen.

Dieses Problem wird durch die Fahrzeugsitzanordnung gemäß Anspruch 1 sowie durch das Verfahren gemäß Anspruch 15 gelöst. Weiterbildungen der Erfindung sind in den abhängigen Ansprüchen angegeben.

Danach wird eine Fahrzeugsitzanordnung für ein Kraftfahrzeug bereitgestellt, mit
- einem Fahrzeugsitz, der mindestens ein zum Schutz eines auf dem Fahrzeugsitz befindlichen Fahrzeuginsassen aufblasbares Element aufweist, wobei
- das aufblasbare Element so ausgebildet und angeordnet ist, dass es sich überwiegend in Richtung auf den Fahrzeuginsassen ausdehnt, wenn es aufgeblasen wird, und wobei
- das aufblasbare Element ungefaltet oder mit nur einer Falte oder einer Stülpung versehen in eine Rückenlehne des Fahrzeugsitzes integriert ist, wobei
- das aufblasbare Element zwischen einer Polsterung des Fahrzeugsitzes und einem Bezug des Fahrzeugsitzes angeordnet ist.

Das aufblasbare Element weist insbesondere ein Hüllmaterial auf, das eine aufblasbare Kammer begrenzt. Das Hüllmaterial ist z. B. aus einem herkömmlichen Gassackgewebe gebildet, wobei zwei oder mehr Lagen des Gassackmaterials, insbesondere über eine Randnaht, miteinander verbunden sein können. Als Hüllmaterial kommen jedoch auch andere (z.B. elastische) Materialien in Frage.

Des Weiteren kann die Kammer des aufblasbaren Elementes auch unmittelbar durch Strukturen des Fahrzeugsitzes selber begrenzt sein, so dass das aufblasbare Element kein gesondertes Hüllmaterial aufweist. Auf diese Ausgestaltung wird weiter unten genauer eingegangen.

In einer Variante erstreckt sich das aufblasbare Element im nicht aufgeblasenen Zustand flach. Insbesondere weist das gar nicht oder einfach gefaltete bzw. gestülpte aufblasbare Element ein Hüllmaterial auf, das aus einer oder aus mehreren Materiallagen besteht. Zum Versehen des aufblasbaren Elementes mit einer "Stülpung" wird ein Abschnitt des unaufgeblasenen aufblasbaren Elementes, d.h. insbesondere ein Abschnitt des Hüllmaterials, in das Innere des aufblasbaren Elementes hineingestülpt.

Dass das aufblasbare Element ungefaltet bzw. nur einfach gefaltet sein soll, bezieht auf das fertiggestellte aufblasbare Element. Das aufblasbare Element kann jedoch durchaus durch Umfalten eines Hüllmaterialzuschnitts hergestellt werden und zur Unterbringung in dem Fahrzeugsitz noch einmal gefaltet werden, z.B. derart, dass nach der Faltung zwei Abschnitte der Außenseite des aufblasbaren Elementes aneinander liegen.

Des Weiteren ist das aufblasbare Element in einem Beispiel der Erfindung so ausgebildet und angeordnet, dass es sich im aufgeblasenen Zustand größtenteils zwischen einer Seite des eingebauten Fahrzeugsitzes, die der dem Fahrzeugsitz näheren Fahrzeuglängsseite (der beiden, einander gegenüberliegenden Fahrzeuglängsseiten des Fahrzeugs) zugewandt ist und dem Fahrzeuginsassen erstreckt. D. h. das aufblasbare Element erstreckt sich nicht wie ein konventioneller Seitengassack überwiegend zwischen dem Fahrzeugsitz und der Fahrzeuglängsseite, sondern in einem Bereich, der einerseits durch eine Ebene, in der sich die zur Fahrzeuglängsseite weisende Seite des Fahrzeugsitzes erstreckt und andererseits durch den Fahrzeuginsassen begrenzt ist. Das aufblasbare Element ragt somit im aufgeblasenen Zustand kaum oder gar nicht in den Raum zwischen dem Fahrzeugsitz und der Fahrzeuglängsseite hinein.

Zum Aufblasen des aufblasbaren Elementes sind insbesondere Mittel vorgesehen, die das aufblasbare Element ab Beginn einer Kollision des Kraftfahrzeuges aufblasen. Die Mittel werden durch ein Steuersignal einer Crash-Sensorik des Fahrzeuges aktiviert; insbesondere, wenn diese eine Seitenkollision des Fahrzeugs detektiert. Somit hat das aufblasbare Element die Funktion, den Fahrzeuginsassen im Falle einer sich tatsächlich ereignenden Kollision zu schützen.

Das aufblasbare Element ist in einer anderen Ausgestaltung der Erfindung so ausgebildet und angeordnet, dass es, während es sich (impulsartig) ausdehnt, eine Kraft (bzw. einen Impuls) auf den Fahrzeuginsassen ausübt, die ihn von einer Fahrzeugseitenstruktur (Fahrzeuglängsseite) weg bewegt. Insbesondere wird der Fahrzeuginsasse durch das sich aufblasende aufblasbare Element von einer Kollisionsstelle des Fahrzeugs, insbesondere von einem Abschnitt der dem Fahrzeugsitz nächstliegenden Fahrzeuglängsseite, der von einer Kollision des Fahrzeugs betroffen ist, weg bewegt. Das Aufblasen des aufblasbaren Elementes erfolgt insbesondere so, dass die Kraft auf den Fahrzeuginsassen nicht so groß wird, dass ein Verletzungsrisiko besteht.

Durch das Bewegen des Fahrzeuginsassen von der Kollisionsstelle weg wird einer Bewegung des Fahrzeuginsassen aufgrund seiner Massenträgheit auf die Kollisionsstelle zu entgegengewirkt. Zudem vergrößert sich der zwischen dem Fahrzeuginsassen und der Kollisionsstelle vorhandene Weg (Absorptionsweg), so dass mehr Energie einer infolge der Kollision in den Fahrzeuginnenraum intrudierenden Struktur des Fahrzeugs (insbesondere der Fahrzeuglängsseite) dissipiert wird, bevor die Struktur auf den Fahrzeuginsassen auftrifft, als bei Verwendung nur eines konventionellen Seitengassacks.

Insbesondere übt das aufblasbare Element somit die Kraft auf den Fahrzeuginsassen, die ihn von der Kollisionsstelle weg bewegt, aus, bevor es in direkten Kontakt mit einem in den Fahrzeuginnenraum intrudierenden Abschnitt der Fahrzeugseitenstruktur kommt. Das bedeutet, dass das Wegbewegen des Fahrzeuginsassen von der Kollisionsstelle unabhängig von der Bewegung der Kollisionsstelle auf den Fahrzeuginsassen zu ist, d.h. der Fahrzeuginsasse wird nicht aufgrund eines Aufpralls der intrudierenden Fahrzeugseitenstruktur auf das aufblasbare Element bewegt. Erst im weiteren Verlauf der Kollision, d. h. bei fortgeschrittenem Eindringen der Fahrzeugseitenstruktur in den Innenraum, kann es zu einem mittelbaren oder unmittelbaren Aufprall der intrudierenden Struktur mit dem Fahrzeuginsassen kommen, wobei die Stärke des Aufpralls durch den verlängerten Absorptionsweg vermindert ist.

Das aufblasbare Element ist in einer Variante der Erfindung so ausgebildet, und angeordnet, dass es überwiegend auf den Rippenbereich des Fahrzeuginsassen einwirkt. In einer anderen Ausgestaltung wird die Kraft vorwiegend im Bereich der Schulter und/oder des Beckens des Fahrzeuginsassen auf diesen übertragen.

In einer anderen Weiterbildung der Erfindung weist die Fahrzeugsitzanordnung Mittel zum Dämpfen eines Aufpralls des Fahrzeuginsassen und/oder einer Fahrzeugstruktur auf das aufblasbare Element auf. Die Mittel umfassen insbesondere ein absorbierendes Element, das Energie der aufprallenden Struktur bzw. des aufprallenden Fahrzeuginsassen dissipiert. Beispielsweise umfassen die Mittel eine Stoßdämpferstruktur, die mit dem aufblasbaren Element gekoppelt ist, oder eine Abströmöffnung, aus der Gas aus dem aufblasbaren Element nach außen abströmen kann.

Die Abströmöffnung ist beispielsweise permanent in einem Hüllenmaterial, das eine Kammer des aufblasbaren Elementes umgibt, vorhanden. In einer anderen Ausgestaltung ist die Abströmöffnung zu Beginn des Aufblasens des aufblasbaren Elementes verschlossen und wird erst zu einem vorgebbaren Zeitpunkt nach Beginn des Aufblasens geöffnet oder sie wird erst nach einer bestimmten Zeit in dem aufblasbaren Element gebildet. Es können selbstverständlich auch mehrere Abströmöffnungen vorhanden sein.

In einer Weiterbildung ist das aufblasbare Element ausgebildet, in einer ersten Phase des Ausdehnens die Kraft auf den Fahrzeuginsassen auszuüben, während die Mittel zum Dämpfen eines Aufpralls (des Fahrzeuginsassen und/oder einer intrudierenden Fahrzeugstruktur) während einer nachfolgenden, zweiten Phase des Ausdehnens des aufblasbaren Elementes aktiviert werden.

In dieser Weiterbildung erfolgt somit zuerst ein Aufblasen des aufblasbaren Elementes, ohne dass die Mittel zum Dämpfen des Aufpralls aktiviert sind. Dies ermöglicht insbesondere eine möglichst effiziente Kraftübertragung vom sich ausdehnenden aufblasbaren Element auf den Fahrzeuginsassen und somit ein möglichst wirksames Wegbewegen des Fahrzeuginsassen. Beispielsweise weisen die Mittel zum Dämpfen eines Aufpralls in dieser Variante der Erfindung eine Abströmöffnung des aufblasbaren Elementes auf, die erst nach einer bestimmten Zeit nach Beginn des Aufblasens des aufblasbaren Elementes freigegeben wird, damit sich das aufblasbare Element in der Anfangsphase möglichst rasch ausdehnt und einen möglichst großen Impuls auf den Fahrzeuginsassen ausübt.

Die Abströmöffnung kann z. B. passiv gesteuert sein, d. h. insbesondere einen Mechanismus umfassen, der die Ausdehnung des Gassacks nutzt, um die Abströmöffnung freizugeben. Dies kann beispielsweise ein Band sein, das an einem Hüllmaterial des aufblasbaren Elementes festgelegt ist und das mit einem Verschlussmechanismus der Abströmöffnung verbunden ist. Das Öffnen der Abströmöffnung kann auch aktiv erfolgen, insbesondere durch eine Verschlussvorrichtung, die auf ein Steuersignal einer Crash-Elektronik des Fahrzeugs reagiert und die Ausströmöffnung in Abhängigkeit von dem Steuersignal z. B. pyrotechnisch oder elektromechanisch freigibt.

Es wird darauf hingewiesen, dass das aufblasbare Element und/oder die Mittel zum Aufblasen des aufblasbaren Elementes zwar insbesondere bei Beginn der Kollision aktiviert werden. Es kann jedoch auch vorgesehen sein, dass das Aufblasen des aufblasbaren Elementes bereits vor dem Beginn der eigentlichen Kollision initiiert wird, um den Fahrzeuginsassen möglichst weit von der Kollisionsstelle weg zu bewegen und einen möglichst großen Absorptionsweg zu schaffen. Das Auslösen des aufblasbaren Elementes kann somit bereits als Reaktion auf ein Steuersignal einer Pre-Crash-Elektronik des Fahrzeugs erfolgen.

In einer anderen Ausgestaltung der Erfindung ist das aufblasbare Element reversibel aufblasbar gestaltet, d. h. es kann auch zu Komfortzwecken (z.B. zur Veränderung der Form des Sitzes) aufgeblasen werden. Gleichzeitig sind die Mittel zum Aufblasen des aufblasbaren Elementes so ausgestaltet, dass sie ein wiederholtes Befüllen des aufblasbaren Elementes ermöglichen.

Es versteht sich, dass der Fahrzeugsitz auch eine Mehrzahl aufblasbare Elemente aufweisen kann. Insbesondere können mehrere aufblasbare Elemente jeweils in Form einer Kammer eines Mehrkammerelementes ausgebildet sein. Die Kammern sind z. B. durch ein gemeinsames Hüllmaterial begrenzt und untereinander z. B. durch Nähte abgegrenzt, wobei nicht ausgeschlossen ist, dass die Kammern oder einige der Kammern in Strömungsverbindung miteinander stehen.

Das aufblasbare Element bzw. die mehreren aufblasbaren Elemente ist/sind darüber hinaus z. B. an oder in einer Seitenwange des Fahrzeugsitzes angeordnet, der dem auf dem Sitz befindlichen Fahrzeuginsassen zugewandt ist. Die Seitenwange begrenzt insbesondere ein Mittelteil einer Sitzfläche und/oder einer Rückenlehne des Fahrzeugsitzes. Es kann auch vorgesehen sein, dass an einander gegenüberliegenden Seitenwangen des Fahrzeugsitzes jeweils aufblasbare Elemente angeordnet sind.

In einer anderen Ausgestaltung der Erfindung sind mindestens zwei aufblasbare Elemente - bezogen auf den eingebauten Zustand des Fahrzeugsitzes - entlang der Fahrzeughöhenrichtung übereinander und/oder mindestens zwei aufblasbare Elemente quer zur Fahrzeuglängsrichtung nebeneinander angeordnet. Das Anordnen mehrerer aufblasbarer Elemente übereinander ermöglicht insbesondere, dass ein größerer Körperabschnitt des Fahrzeuginsassen (entlang seiner Körperlänge) von dem aufblasbaren Element abgedeckt wird bzw. über einen größeren Körperabschnitt eine Kraft auf den Fahrzeuginsassen übertragen werden kann. Insbesondere sind die übereinander angeordneten aufblasbaren Elemente so beschaffen, dass sie sich im aufgeblasenen Zustand jeweils im Wesentlichen nicht zwischen dem Fahrzeugsitz und der dem Fahrzeugsitz nächstliegenden Fahrzeugseitenstruktur erstrecken.

Die quer zur Fahrzeuglängsrichtung angeordneten aufblasbaren Elemente sind insbesondere so ausgebildet und angeordnet, dass sich die Kräfte in Richtung des Fahrzeuginsassen, die jeweils beim Ausdehnen der aufblasbaren Elemente entstehen, addieren, so dass eine gegenüber einem einzelnen aufblasbaren Element erhöhte Kraft (bzw. Impuls) auf den Fahrzeuginsassen einwirkt. Insbesondere sind die nebeneinander angeordneten mehreren aufblasbaren Elemente so ausgestaltet und angeordnet, dass sie sich im aufgeblasenen Zustand im Wesentlichen nicht zwischen dem Fahrzeugsitz und der dem Fahrzeugsitz nächstgelegenen Fahrzeugseitenstruktur erstrecken.

Es versteht sich, dass die mehreren aufblasbaren Elemente, die in Fahrzeughöhenrichtung übereinander bzw. die in Fahrzeugquerrichtung nebeneinander angeordnet sind, entweder als separat hergestellte Elemente, die z. B. miteinander verbunden sind, oder als Kammern eines Mehrkammerelementes ausgebildet sein können.

Sind mehrere aufblasbare Elemente vorhanden (z. B. in Form mehrerer Kammern eines aufblasbaren Mehrkammerelementes) müssen die einzelnen aufblasbaren Elemente nicht unbedingt gleichzeitig befüllt werden. Denkbar ist auch, dass die aufblasbaren Elemente nacheinander oder einige der aufblasbaren Elemente gar nicht befüllt werden. Wie bzw. welche der aufblasbaren Elemente befüllt werden, wird insbesondere von einer Steuerelektronik des Fahrzeugs bestimmt, die Art und Schwere der Kollision und/oder Kenndaten (Körpergröße, Körpergewicht, etc.) des Fahrzeuginsassen erfasst.

Erfindungsgemäß ist das aufblasbare Element zwischen einer Polsterung und einem Bezug (z. B. Stoff oder Leder) des Fahrzeugsitzes angeordnet. Zudem ist das aufblasbare Element z.B. an der Polsterung und/oder an dem Bezug festgelegt, d. h. über Befestigungsmittel mit dem Bezug verbunden. Zusätzlich oder alternativ kann das aufblasbare Element mit einer anderen Struktur des Fahrzeugsitzes verbunden sein. Das Verbinden des aufblasbaren Elementes mit einer Struktur des Fahrzeugsitzes hat insbesondere den Zweck, Kräfte, die bei einem Aufprall des Fahrzeuginsassen auf das aufblasbare Element entstehen, abzuleiten bzw. das aufblasbare Element beim Aufprall des Fahrzeuginsassen in Position zu halten.

Des Weiteren kann die Fahrzeugsitzanordnung Befestigungsmittel aufweisen, über die das aufblasbare Element so an einer Struktur des Fahrzeugsitzes befestigt ist, dass die Richtung des Ausdehnens des aufblasbaren Elementes beeinflusst wird. Beispielsweise umfassen die Befestigungsmittel ein Band, das einen Abschnitt eines Hüllmaterials des aufblasbaren Elementes mit dem Fahrzeugsitz verbindet, wobei das Band die Hauptausdehnungsrichtung des aufblasbaren Elementes steuert. Selbstverständlich können auch mehrere derartige Bänder vorgesehen sein.

In einer weiteren Variante weist die erfindungsgemäße Fahrzeugsitzanordnung ein Hüllmaterial auf, das eine Kammer des aufblasbaren Elementes begrenzt, wobei ein Verbindungselement vorgesehen ist, das zwei Abschnitte einer Innenseite des Hüllmaterials so miteinander verbindet, dass die Richtung des Ausdehnen des aufblasbaren Elementes beeinflusst wird. Insbesondere ist das Verbindungselement in Form eines Bandes ("Fangband") ausgebildet. Es können auch mehrere derartige Bänder angeordnet sein.

In einer weiteren Ausgestaltung der Erfindung umfasst die Fahrzeugsitzanordnung des Weiteren einen Gassack, der sich im entfalteten Zustand größtenteils zwischen einer Fahrzeugseitenstruktur und dem Fahrzeugsitz erstreckt. D. h. neben dem aufblasbaren Element bzw. der Mehrzahl aufblasbarer Elemente, die beim Ausdehnen eine Kraft auf den Fahrzeuginsassen ausüben, ist ein konventioneller Gassack (insbesondere ein Seitengassack) angeordnet, der dazu dient, Energie einer intrudierenden Fahrzeugstruktur (insbesondere einer Struktur einer Fahrzeuglängsseite) zu dissipieren. Ein derartiger zusätzlicher konventioneller Gassack ist aufgrund der Schutzwirkung des aufblasbaren Elementes jedoch nicht zwingend erforderlich.

Als Mittel zum Aufblasen des aufblasbaren Elementes wird insbesondere ein pyrotechnischer Gasgenerator verwendet, der zum Zeitpunkt der Kollision des Fahrzeugs gezündet wird. In einem anderen Beispiel dient eine pneumatische Druckquelle zum Aufblasen des aufblasbaren Elementes, die z.B. mit einem herkömmlichen Gasgenerator ergänzt werden kann.

Insbesondere kann die pneumatische Druckquelle zu einem Aufblasen des aufblasbaren Elementes vor oder bei Beginn der eigentlichen Kollision verwendet werden, d. h. in einer ersten Phase des Aufblasens, während der herkömmliche (z.B. pyrotechnische) Gasgenerator erst in einer späteren zweiten Phase gezündet wird, um das Aufblasen des aufblasbaren Elementes zu unterstützen. Die Mittel zum Aufblasen des aufblasbaren Elementes können, sollte zusätzlich ein konventioneller Gassack vorhanden sein, gleichzeitig auch dazu dienen, den konventionellen Gassack aufzublasen. Es kann jedoch auch vorgesehen sein, dass das aufblasbare Element und der konventionelle Gassack jeweils eigene Mittel zum Aufblasen aufweisen.

In einer weiteren Variante der Erfindung sind das aufblasbare Element und die Mittel zum Aufblasen des aufblasbaren Elementes (und gegebenenfalls weitere Elemente wie z. B. Halteelemente) in den Fahrzeugsitz, insbesondere in die Rückenlehne des Fahrzeugsitzes, integriert. In einer Ausgestaltung sind diese Komponenten als separates Modul realisiert, das während des Zusammenbaus des Fahrzeugsitzes oder nach dem Zusammenbau des Fahrzeugsitzes in diesem oder an diesem angeordnet wird. Insbesondere kann das aufblasbare Element so ausgelegt sein, dass seine Wirkung im Wesentlichen unabhängig von der Art des Fahrzeuges ist, so dass das aufblasbare Element (bzw. ein Modul, das das aufblasbare Element und Mittel zum Aufblasen des aufblasbaren Elementes umfasst) für unterschiedliche Fahrzeugtypen verwendbar ist.

Die Erfindung betrifft auch ein Verfahren zum Schützen eines Fahrzeuginsassen, mit den Schritten:
- Bereitstellen eines Fahrzeugsitzes, das ein aufblasbares Element aufweist, das ungefaltet oder mit nur einer Falte oder einer Stülpung versehen in eine Rückenlehne des Fahrzeugsitzes integriert ist;
- Anordnen und Aufblasen des aufblasbaren Elementes derart, dass es sich überwiegend in Richtung auf den Fahrzeuginsassen ausdehnt, wobei
- das aufblasbare Element zwischen einer Polsterung des Fahrzeugsitzes und einem Bezug des Fahrzeugsitzes angeordnet wird.

Die Erfindung wird im Folgenden anhand von Ausführungsbeispielen unter Bezugnahme auf die Figuren näher erläutert. Es zeigen:
- Fig. 1: eine Fahrzeugsitzanordnung gemäß einem ersten nicht erfindungsgemäßen Beispiel;
- Fig. 2: eine Fahrzeugsitzanordnung gemäß einem zweiten nicht erfindungsgemäßen Beispiel ;
- Fig. 3: eine Fahrzeugsitzanordnung gemäß einem dritten nicht erfindungsgemäßen Beispiel;
- Fig. 4: eine Fahrzeugsitzanordnung gemäß einem vierten nicht erfindungsgemäßen Beispiel;
- Fig. 5: eine Schnittansicht eines Teiles eines Fahrzeugsitzes gemäß einem fünften nicht erfindungsgemäßen Beispiel;
- Fig. 6: den Fahrzeugsitz aus Fig. 5 mit einem aufblasbaren Element im aufgeblasenen Zustand;
- Fig. 7: eine Schnittansicht eines Teiles eines Fahrzeugsitzes einer Fahrzeugsitzanordnung gemäß einem sechsten nicht erfindungsgemäßen Beispiel;
- Fig. 8: eine Schnittansicht eines Teiles einer Fahrzeugsitzanordnung gemäß einem ersten Ausführungsbeispiel der Erfindung;
- Fig. 9: eine Schnittansicht eines Teiles einer Fahrzeugsitzanordnung gemäß einem zweiten Ausführungsbeispiel der Erfindung;
- Fig. 10: eine Schnittansicht eines Teiles einer Fahrzeugsitzanordnung gemäß einem nicht erfindungsgemäßen Beispiel ;
- Fig. 11: eine Abwandlung des Beispiels der Fig. 10;
- Fig. 12: eine weitere Abwandlung desBeispiels der Fig. 10;
- Fig. 13: eine perspektivische Ansicht einer Ausgestaltung zweier aufblasbarer Elemente;

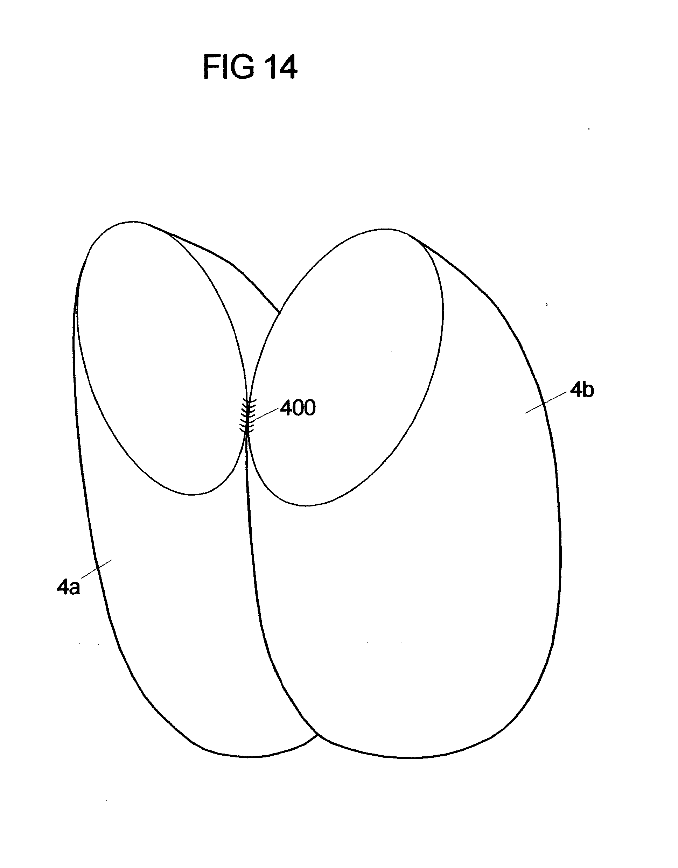

- Fig. 14: eine perspektivische Ansicht einer anderen Ausgestaltung zweier aufblasbarer Elemente;
- Fig. 15: eine schematische, ausschnitthafte Schnittansicht eines nicht erfindungsgemäßen Airbagmoduls bzw. einer nicht erfindungsgemäßen Gassackanordnung,
- Fig. 16: eine schematische, ausschnitthafte Schnittansicht eines nicht erfindungsgemäßen Airbagmoduls bzw. einer nicht erfindungsgemäßen Gassackanordnung,
- Fig. 17: eine schematische, ausschnitthafte Schnittansicht eines nicht erfindungsgemäßen Airbagmoduls bzw. einer nicht erfindungsgemäßen Gassackanordnung mit einem Widerlagerelement,
- Fig. 18: eine schematische, ausschnitthafte Schnittansicht eines nicht erfindungsgemäßen Airbagmoduls bzw. einer nicht erfindungsgemäßen Gassackanordnung nach Art der Figur 17,
- Fig. 19: eine schematische, ausschnitthafte Schnittansicht eines nicht erfindungsgemäßen Airbagmoduls bzw. einer nicht erfindungsgemäßen Gassackanordnung mit einem Widerlagerelement aus einem harten Schaum,
- Fig. 20: eine schematische, ausschnitthafte Schnittansicht eines nicht erfindungsgemäßen Airbagmoduls bzw. einer nicht erfindungsgemäßen Gassackanordnung mit einem Widerlagerelement in Form eines Gehäuses,
- Fig. 21: eine schematische, ausschnitthafte Schnittansicht eines nicht erfindungsgemäßen Airbagmoduls bzw. einer nicht erfindungsgemäßen Gassackanordnung für einen Schalensitz,
- Fig. 22: eine schematische, ausschnitthafte Schnittansicht eines nicht erfindungsgemäßen Airbagmoduls bzw. einer nicht erfindungsgemäßen Gässackanördnung mit einem balgförmigen Gassack,
- Fig. 23: eine schematische, ausschnitthafte Schnittansicht eines nicht erfindungsgemäßen Airbagmoduls bzw. einer nicht erfindungsgemäßen Gassackanordnung mit einem auf dem Sitzschaum ausgebreiteten Gassack,
- Fig. 24: eine schematische, ausschnitthafte Schnittansicht eines nicht erfindungsgemäßen Airbagmoduls bzw. einer nicht erfindungsgemäßen Gassackanordnung mit einem verlängerten Gassack,
- Fig. 25: eine schematische, ausschnitthafte Schnittansicht eines nicht erfindungsgemäßen Airbagmoduls bzw. einer nicht erfindungsgemäßen Gassackanordnung mit einer Durchgangsöffnung am Lehnenrahmen für eine Gasgeneratorzuleitung,
- Fig. 26: eine schematische, ausschnitthafte Schnittansicht eines nicht erfindungsgemäßen Airbagmoduls bzw. einer nicht erfindungsgemäßen Gassackanordnung mit Befestigungslöchern im Gassack,
- Fig. 27: eine schematische, ausschnitthafte Schnittansicht eines nicht erfindungsgemäßen Airbagmoduls bzw. einer nicht erfindungsgemäßen Gassackanordnung mit zwei Gassäcken,
- Fig. 28: eine schematische, ausschnitthafte Schnittansicht eines nicht erfindungsgemäßen Airbagmoduls bzw. einer nicht erfindungsgemäßen Gassackanordnung mit einer Sitzschaumausnehmung zur Aufnahme des oder der Gassäcke,
- Fig. 29: eine schematische, ausschnitthafte Schnittansicht eines nicht erfindungsgemäßen Airbagmoduls bzw. einer nicht erfindungsgemäßen Gassackanordnung mit einer großflächigen Überdeckung der Ausnehmung des Sitzschaumes,
- Fig. 30: eine schematische, ausschnitthafte Schnittansicht eines nicht erfindungsgemäßen Airbagmoduls bzw. einer nicht erfindungsgemäßen Gassackanordnung mit einem am Airbagmodul vorgesehenen Sitzschaumabschnitt,
- Fig. 31: eine schematische, ausschnitthafte Schnittansicht einer Abwandlung der in der Figur 26 gezeigten nicht erfindungsgemäßen Gassackanordnung,
- Fig. 32: eine schematische, ausschnitthafte Schnittansicht eines nicht erfindungsgemäßen Airbagmoduls bzw. einer nicht erfindungsgemäßen Gassackanordnung gemäß Figur 30, und
- Fig. 33: eine schematische, ausschnitthafte Schnittansicht eines Gassackes eines nicht erfindungsgemäßen Airbagmoduls bzw. einer nicht erfindungsgemäßen Gassackanordnung mit miteinander verklebten Gassackteilen.

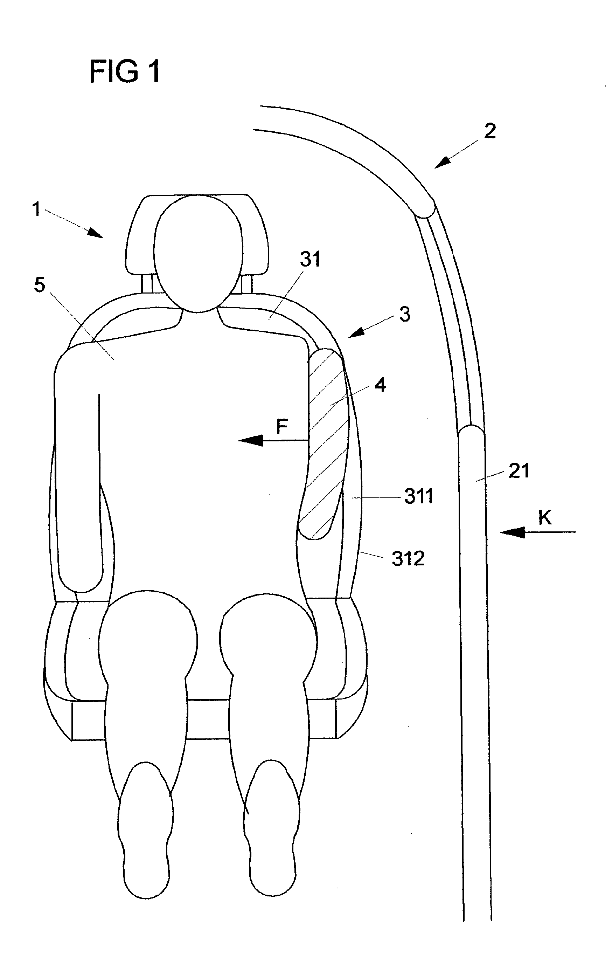

Fig. 1 zeigt eine Fahrzeugsitzanordnung 1, die in einem Fahrzeug 2 montiert ist. Die Fahrzeugsitzanordnung 1 umfasst einen Fahrzeugsitz 3, der ein im Bereich seiner Rückenlehne 31 angeordnetes aufblasbares Element 4 aufweist.

Das aufblasbare Element 4 wird aufgeblasen, wenn eine Crash-Sensorik des Fahrzeugs eine Kollision an einer Seitenstruktur 21 (Fahrzeuglängsseite) des Fahrzeugs feststellt. Die Kraft, die aufgrund der Kollision auf die Seitenstruktur einwirkt, ist durch den Pfeil K gekennzeichnet. Das aufblasbare Element 4 ist so ausgebildet und angeordnet, dass es sich nach Aktivieren impulsartig überwiegend in Richtung auf einen auf dem Sitz befindlichen Fahrzeuginsassen 5 ausdehnt und so beim Ausdehnen eine Kraft F auf den Fahrzeuginsassen 5 ausübt.

Die Kraft F, die der Fahrzeuginsasse durch das sich ausdehnende aufblasbare Element 4 erfährt, bewegt ihn von der Seitenstruktur 21 und somit von der Kollisionsstelle weg, wodurch sich der Absorptionsweg, der zur Verfügung steht, um Energie einer Struktur der Fahrzeuglängsseite 21, die unter Einwirkung der Kollisionskraft K in den Fahrzeuginnenraum intrudiert, zu dissipieren.

Das aufblasbare Element 4 ist im Unterschied zu einem herkömmlichen Seitengassack so an dem Fahrzeugsitz angeordnet, dass es sich im aufgeblasenen Zustand größtenteils zwischen einer Seite 312 des Fahrzeugsitzes 3, die der dem Sitz 3 benachbarten Fahrzeuglängsseite 21 zugewandt ist, und dem Fahrzeuginsassen 5 erstreckt. Ein konventioneller Seitengassack erstreckt sich hingegen im aufgeblasenen Zustand in dem Raum zwischen der Seite 312 und der Fahrzeuglängsseite 21.

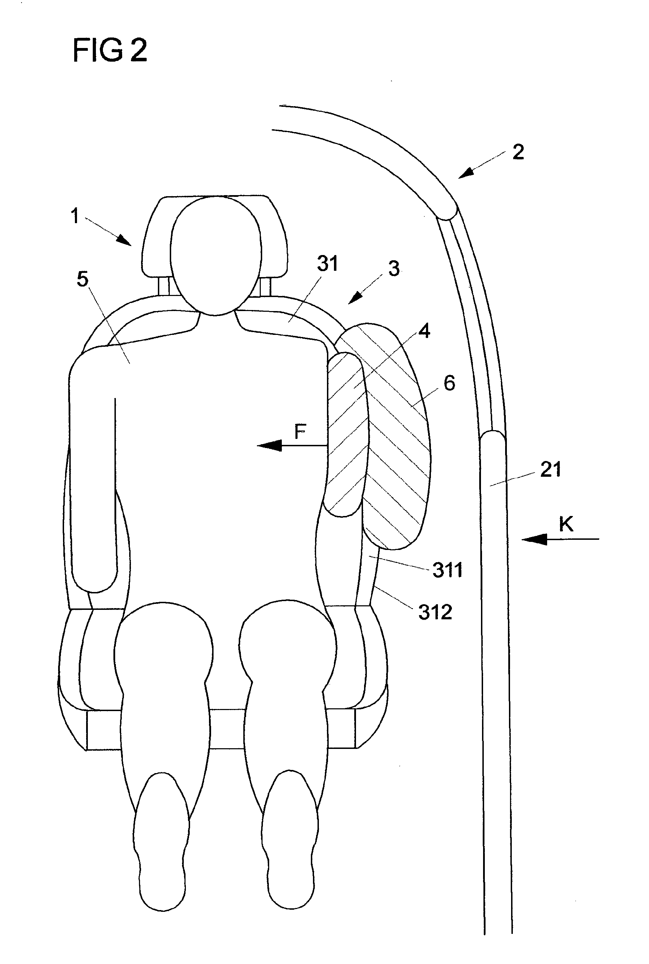

Fig. 2 zeigt in Abwandlung des nicht erfindungsgemäßen Beispiels der Fig. 1 eine Fahrzeugsitzanordnung, die neben dem aufblasbaren Element 4 auch einen konventionellen Seitengassack 6 aufweist. In dieser Variante wird der Fahrzeuginsasse durch das sich ausdehnende aufblasbare Element 4 von der Seitenstruktur 21, die von einer Kollision betroffen ist, wegbewegt. Gleichzeitig wird die Absorption von Energie einer aufgrund der Kollision intrudierenden Struktur durch den sich im aufgeblasenen Zustand zwischen dem Fahrzeugsitz 3 und der Fahrzeuglängsseite 21 erstreckenden Seitengassack 6 unterstützt.

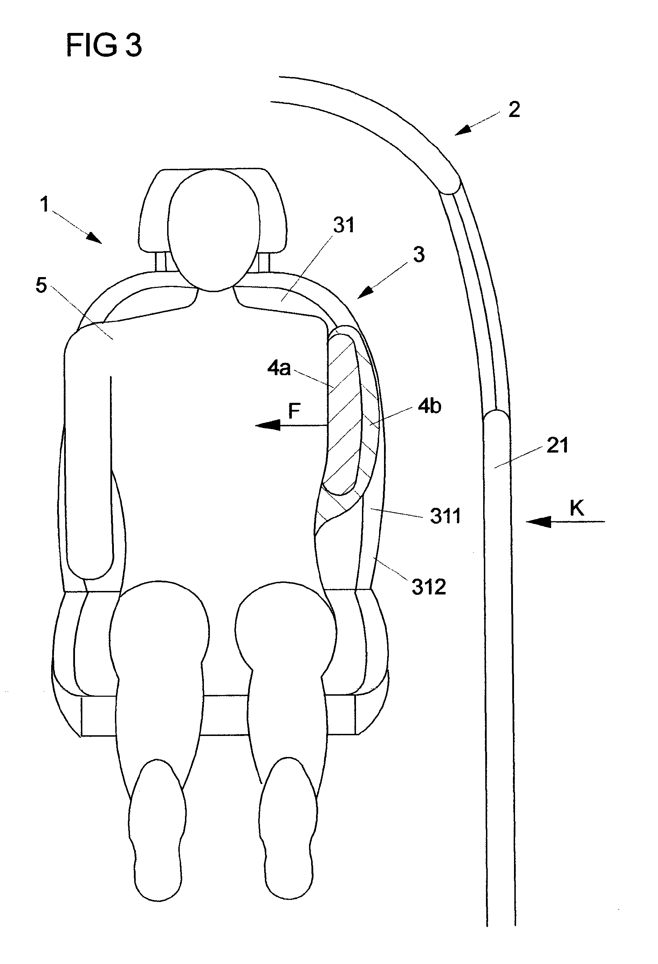

Eine andere Abwandlung des Beispiels der Fig. 1 zeigt Fig. 3. Hier sind zwei aufblasbare Elemente 4a, 4b quer zur Fahrzeuglängsachse nebeneinander angeordnet, die jeweils eine Kraft auf den Fahrzeuginsassen 5 ausüben, wenn sie sich ausdehnen. Die Kraft des äußeren (d.h. näher an der Fahrzeuglängsseite 21) angeordneten Elementes 4b wird überwiegend mittelbar über das innere aufblasbare Element 4a auf den Fahrzeuginsassen übertragen.

Die in Richtung auf den Fahrzeuginsassen weisenden Kräfte addieren sich durch diese Anordnung der beiden aufblasbaren Elemente, so dass eine größere Kraft auf den Fahrzeuginsassen 5 einwirkt als bei Verwendung nur eines einzelnen aufblasbaren Elementes, wodurch der Fahrzeuginsasse um einen größeren Weg von der Kollisionsstelle wegbewegt werden kann.

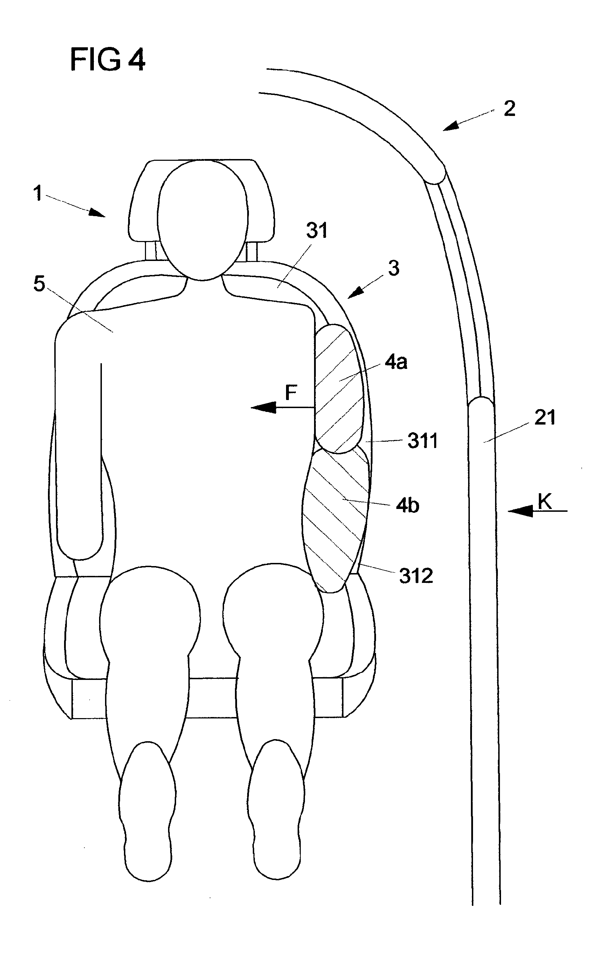

Die aufblasbaren Elemente 4a, 4b sind insbesondere so angeordnet, dass sich im aufgeblasenen Zustand jeweils größtenteils zwischen der Seite 312 des Fahrzeugsitzes an dem Fahrzeuginsassen 5 erstrecken, d. h. sie erstrecken sich nicht oder nur mit einem geringen Anteil zwischen dem Fahrzeugsitz 3 (d.h. dessen Seite 312) und der Fahrzeuglängsseite 21. Fig. 4 zeigt eine weitere Abwandlung des Beispiels der Fig. 1, wonach zwei aufblasbare Elemente 4a, 4b in Fahrzeugshöhenrichtung übereinander angeordnet sind. Mit dieser Anordnung ist es möglich, auf einen größeren Körperabschnitt des Fahrzeugsinsassen 5 einzuwirken. Insbesondere ist das obere aufblasbare Element 4a im Schulterbereich des Fahrzeuginsassen angeordnet, während sich das untere aufblasbare Element 4b von einem Rippenbereich bis zu einem Beckenbereich des Fahrzeuginsassen 5 erstreckt.

Selbstverständlich können die Anordnungen der Figuren 2 bis 4 auch miteinander kombiniert werden. Es können z.B. mehrere Elemente in Fahrzeughöhenrichtung übereinander und auch gleichzeitig mehrere Elemente in Fahrzeugquerrichtung nebeneinander angeordnet sein. Zusätzlich kann zudem auch ein konventioneller Seitengassack, wie in Fig. 2 gezeigt, vorgesehen werden.

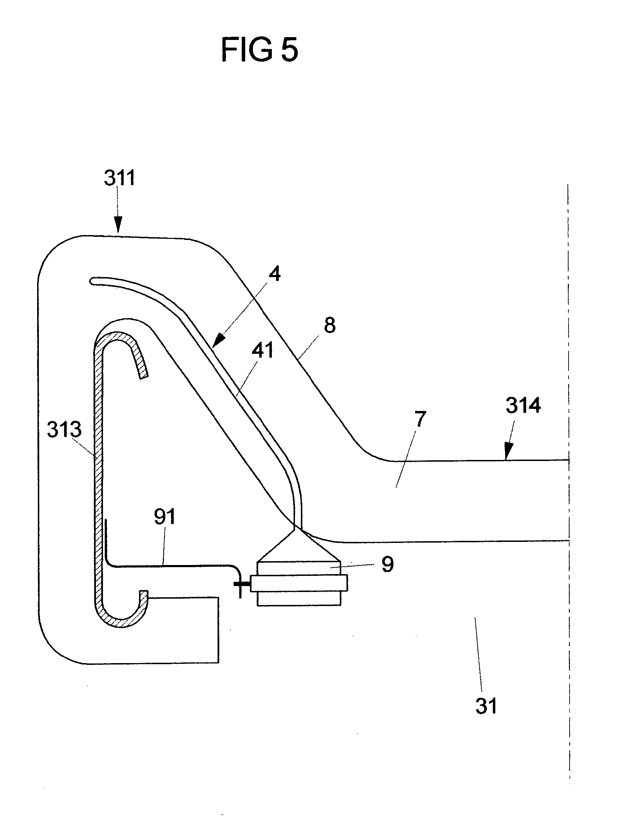

Fig. 5 zeigt einen horizontalen Schnitt durch eine nicht erfindungsgemäße Fahrzeugssitzanordnung in Höhe einer Rückenlehne des Fahrzeugsitzes der Fahrzeugsitzanordnung. Die Rückenlehne 31 weist eine Seitenwange 311 auf, die ein Mittelteil 314 der Rückenlehne 31 begrenzt. In der Seitenwange 311 ist ein Rahmen 313 angeordnet, der die Rückenlehne stabilisiert.

Der Rahmen 313 ist zumindest abschnittsweise von einer Polsterung 7 umgeben, die darüber hinaus einen Abschnitt des Fahrzeugsitzes bildet, der einem auf dem Sitz befindlichen Fahrzeuginsassen (nicht dargestellt) zugewandt sein soll. Die Polsterung 7 ist von einem Bezug 8 umgeben, der eine Außenseite des Fahrzeugsitzes bildet. Die Polsterung 7 ist z. B. durch ein schaumartiges Material gebildet.

In der Polsterung 7 ist ein aufblasbares Element 4 angeordnet. Das aufblasbare Element weist in einer Variante ein vom Material der Polsterung 7 verschiedenes Hüllmaterial auf, das eine aufblasbare Kammer 41 begrenzt. Z. B. besteht das Hüllmaterial aus einem textilen Gewebe, etwa einem konventionellen Gassackmaterial.

In einer anderen Variante weist das aufblasbare Element 4 kein gesondertes Hüllmaterial auf, sondern das Material der Polsterung 7 begrenzt unmittelbar die aufblasbare Kammer 41. In dieser Variante ist das aufblasbare Element somit als dehnbarer Holraum in der Polsterung 7 ausgebildet.

Das in die Polsterung 7 integrierte aufblasbare Element 4 wird über Mittel zum Aufblasen in Form eines Gasgenerators 9 (z. B. eines Mikro-Gasgenerators) aufgeblasen. Der Gasgenerator 9 ist in die Rückenlehne 31 des Fahrzeugsitzes integriert und über einen Halter 91, der insbesondere an dem Rahmen 313 festgelegt sein kann, befestigt.

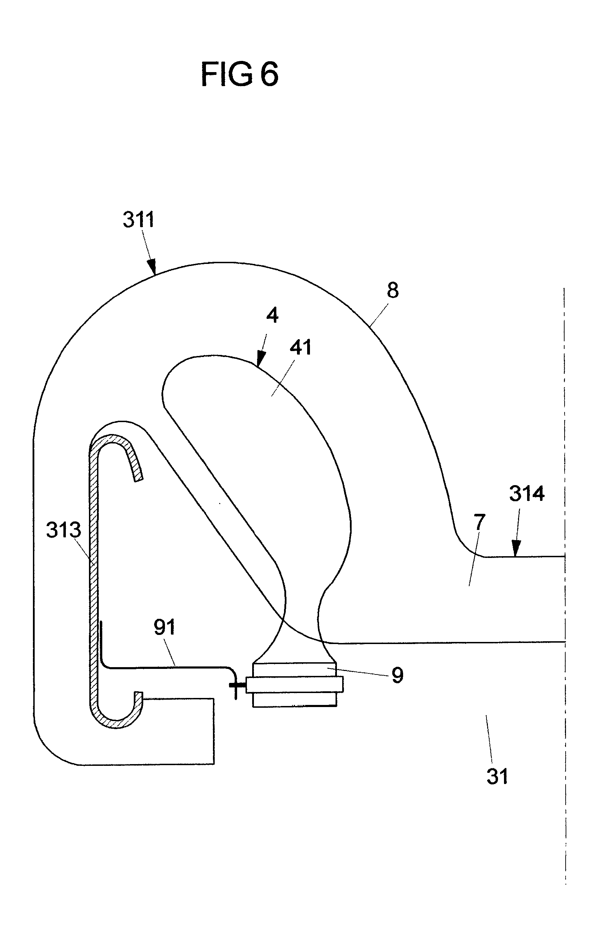

Fig. 6 zeigt das aufblasbare Element 4 in aufgeblasenem oder zumindest teilweise aufgeblasenem Zustand. Das aufblasbare Element 4 ist so angeordnet und beschaffen, dass es sich im Wesentlichen in Richtung eines auf dem auf einem Fahrzeugsitz befindlichen Fahrzeuginsassen (nicht dargestellt) ausdehnt und so über Polsterung 7 eine Kraft auf den Fahrzeuginsassen ausübt, die diesen von einer Kollisionsstelle wegbewegt. Das Material der Polsterung ist entsprechend dehnbar ausgebildet, so dass sich das aufblasbare Element in seinem Inneren im Wesentlichen ungehindert in Richtung auf den Fahrzeuginsassen ausdehnen kann.

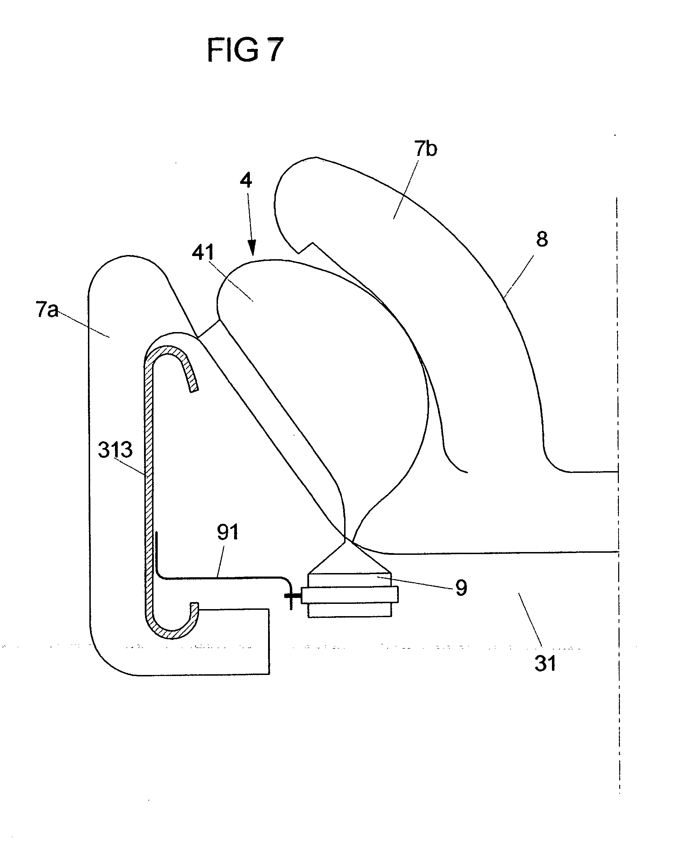

In einer anderen Variante (Fig. 7) ist die Polsterung 7 so beschaffen, dass sie durch das Ausdehnen des aufblasbaren Elementes 4 zumindest teilweise aufreißt, und so das Ausdehnen des aufblasbaren Elementes und die Kraftübertragung auf den Fahrzeuginsassen möglichst wenig behindert. Gemäß Fig. 7 ist die Polsterung so ausgebildet, dass sie zusammen mit dem Bezug 8 in zwei Teile 7a, 7b aufreißt. Das dem Fahrzeuginsassen zugewandte Teil 7b wird durch das sich ausdehnende aufblasbare Element mit in Richtung auf den Fahrzeuginsassen bewegt, so dass eine Kraft von dem sich ausdehnenden aufblasbaren Element über den Abschnitt 7b der Polsterung 7 auf den Fahrzeuginsassen übertragen wird.

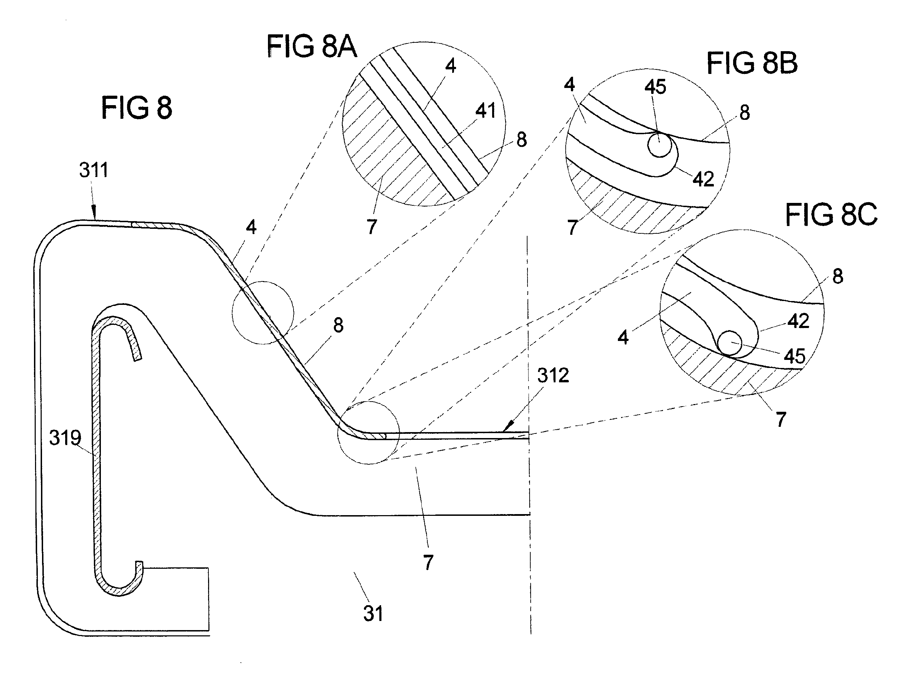

Fig. 8 zeigt einen Schnitt durch den Lehnenbereich eines Fahrzeugsitzes einer erfindungsgemäßen Fahrzeugsitzanordnung. Im Unterschied zu den Varianten der der Figuren 5 bis 7 ist das aufblasbare Element 4 jedoch zwischen der Polsterung 7 und dem Bezug 8 angeordnet.

Dabei erstreckt sich insbesondere ein Hüllmaterial, das die aufblasbare Kammer 41 des Elementes 4 begrenzt, zwischen der Polsterung 7 und dem Bezug 8 (vgl. Ausschnitt 8A). In einer anderen Variante weist das aufblasbare Element 4 kein vom Bezug oder der Polsterung verschiedenes Hüllmaterial auf, sondern das aufblasbare Element wird unmittelbar durch den Bezug und/oder die Polsterung des Fahrzeugsitzes gebildet, d.h. die Kammer 41 des aufblasbaren Elementes wird durch den Bezug 8 und/oder die Polsterung 7 begrenzt. Beispielsweise ist die Kammer 41 in dieser Variante durch Nähte, die den Bezug an der Polsterung festlegen, abgeteilt.

Weist das aufblasbare Element wie in Fig. 8 ein separates Hüllmaterial auf, kann dieses an dem Bezug 7 und/oder der Polsterung festgelegt sein. Dies ist in den Ausschnitten B und C dargestellt, wonach das Hüllmaterial 42 des aufblasbaren Elementes 4 über Befestigungsmittel 45 (z. B. Klebstoff oder eine Naht) an dem Bezug 8 bzw. an der Polsterung 7 festgelegt sind. Die Befestigungsmittel 45 dienen insbesondere auch dazu, das aufblasbare Element 4 beim Aufprall des Fahrzeuginsassen oder einer (z. B. in den Fahrzeuginnenraum intrudierenden) Fahrzeugstruktur in Position zu halten und/oder eine Kraft, die dabei auf das aufblasbare Element wirkt, abzuleiten.

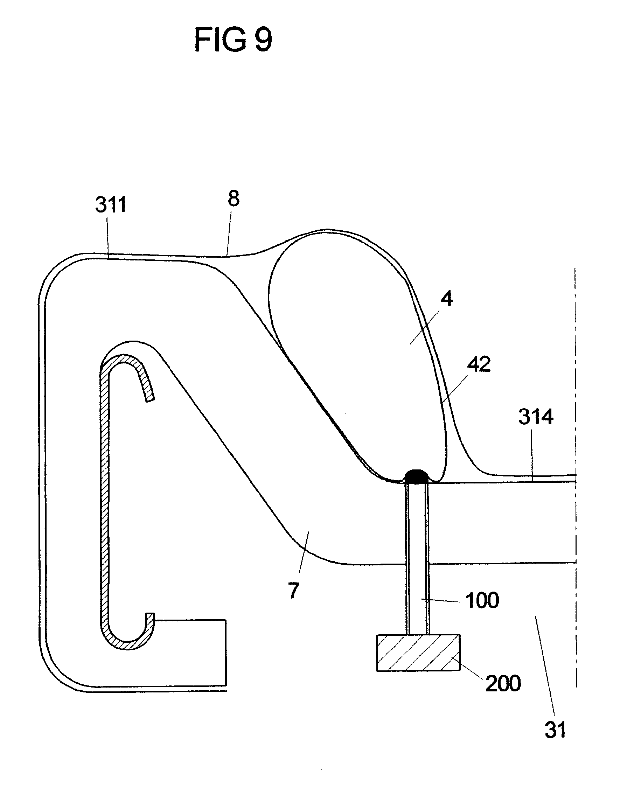

Fig. 9 zeigt ein zwischen der Polsterung 7 und dem Sitzbezug 8 angeordnetes aufblasbares Element 4 in zumindest teilweise aufgeblasenem Zustand. Der Sitzbezug 8 ist in diesem Beispiel so dehnbar ausgebildet, dass er das Ausdehnen des aufblasbaren Elementes möglichst wenig behindert. In einer anderen Variante wird der Sitzbezug durch das Ausdehnen des aufblasbaren Elementes zerrissen, so dass sich das aufblasbare Element ungehindert ausdehnen kann. Hierfür können beispielsweise Schwächungen (z. B. in Form einer Perforation oder einer Reißnaht) in dem Sitzbezug vorhanden sein.

Die Fahrzeugsitzanordnung weist in diesem Ausführungsbeispiel zudem Befestigungsmittel in Form eines Bandes 100 auf, über die ein Abschnitt des Hüllmaterials 42 des aufblasbaren Elementes mit einem Teil 200 des Fahrzeugsitzes verbunden ist. Das Band 100 dient dazu, die Richtung des Ausdehnens des aufblasbaren Elementes zu beeinflussen, d. h. dazu beizutragen, dass sich das aufblasbare Element überwiegend in Richtung auf den Fahrzeuginsassen ausdehnt. Gleichzeitig kann das Band 100 so beschaffen und angeordnet sein, dass es das aufblasbare Element beim Aufprall des Fahrzeuginsassen und/oder einer Fahrzeugstruktur in Position hält.

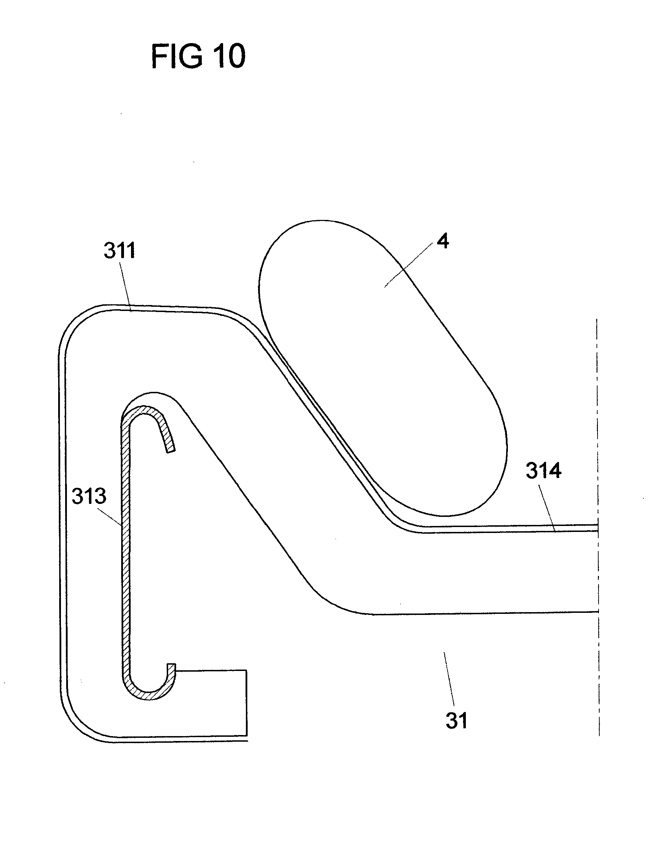

Fig. 10 betrifft eine weitere Variante einer nicht erfindungsgemäßen Fahrzeugsitzanordnung, wobei wiederum eine Schnittansicht durch eine Rückenlehne 31 des Fahrzeugsitzes der Fahrzeugsitzanordnung gezeigt ist. Das aufblasbare Element 4 ist in dieser Variante von außen an der Rückenlehne 31 (genauer an deren Seitenwange 311) angeordnet und z. B. mit dem Bezug 8 und/oder der Polsterung 7 der Rückenlehne 31 verbunden.

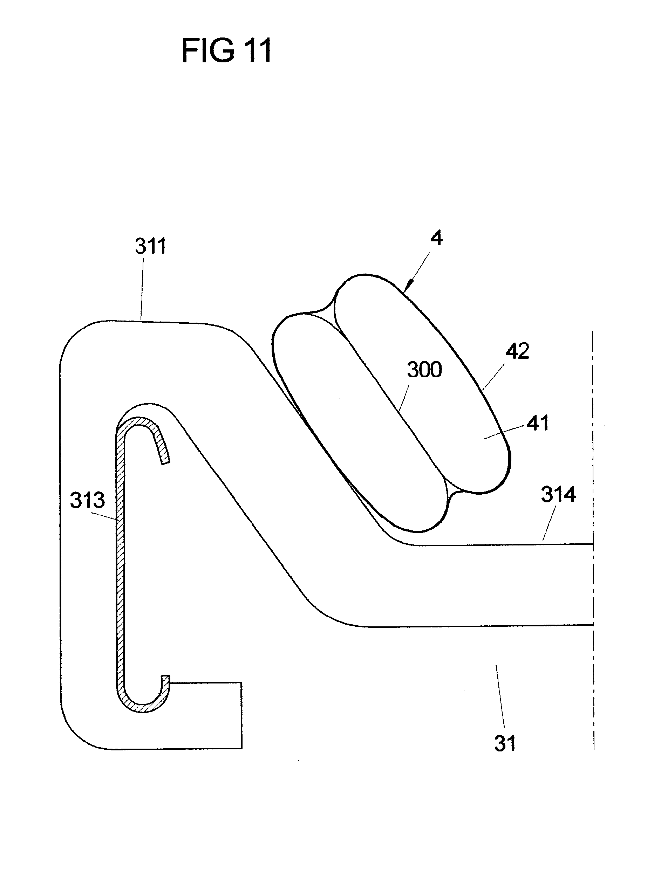

Fig. 11 zeigt eine Weiterbildung der Variante der Fig. 10, wobei im Inneren, d. h. in der Kammer 41, des aufblasbaren Elementes 4 ein Verbindungselement in Form eines Fangbandes 300 angeordnet ist. Das Fangband 300 verbindet Abschnitte der Innenseite des Hüllmaterials 42 miteinander, so dass das aufblasbare Element 4 im aufgeblasenen Zustand eine Einschnürung aufweist. Das Fangband 300 dient insbesondere dazu, die Ausdehnungsrichtung des aufblasbaren Elementes zu beeinflussen, insbesondere so, dass sich das aufblasbare Element im Wesentlichen in Richtung auf den Fahrzeuginsassen ausdehnt.

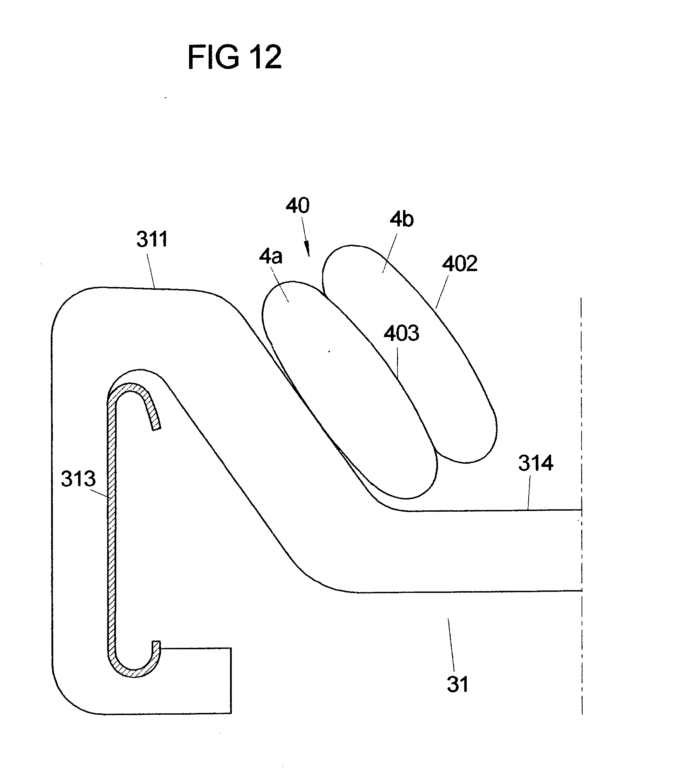

Fig. 12 betrifft eine weitere Abwandlung der Variante der Fig. 10, wonach zwei aufblasbare Elemente 4a, 4b vorgesehen sind, die jeweils als Kammer eines Mehrkammerelementes 40 ausgebildet sind. Das Mehrkammerelement 40 weist ein Hüllmaterial 402 auf, das die beiden Kammern 4a und 4b begrenzt. Die beiden Kammern sind durch ein Trennelement 403 voneinander abgetrennt, wobei das Trennelement 300 das Innere des Hüllmaterials 402 durchläuft. In dem Beispiel der Fig. 11 besteht zwischen den beiden aufblasbaren Elementen 4a, 4b keine Verbindung. Es kann jedoch vorgesehen sein, dass das Trennelement 403 eine Öffnung aufweist, so dass ein Überströmen von Gas aus dem einen aufblasbaren Element in das andere möglich ist.

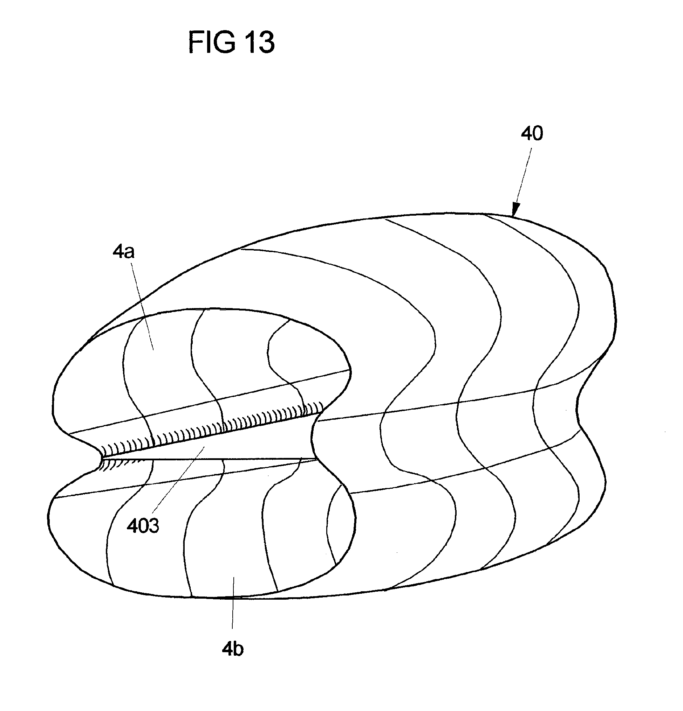

Fig. 13 ist eine perspektivische Ansicht eines Mehrkammerelementes 40 dar, in dem aufblasbare Elemente 4a, 4b in Form von Kammern gebildet sind. Die Kammern sind durch eine Trennwand 403 voneinander getrennt.

Eine andere Ausgestaltung zweier aufblasbarer Elemente ist in Fig. 13 dargestellt. Danach liegen zwei separat hergestellte aufblasbare Elemente 4a, 4b mit ihren Außenseiten abschnittsweise aneinander und sind über eine Verbindung 400 (z. B. in Form einer Naht) miteinander verbunden.

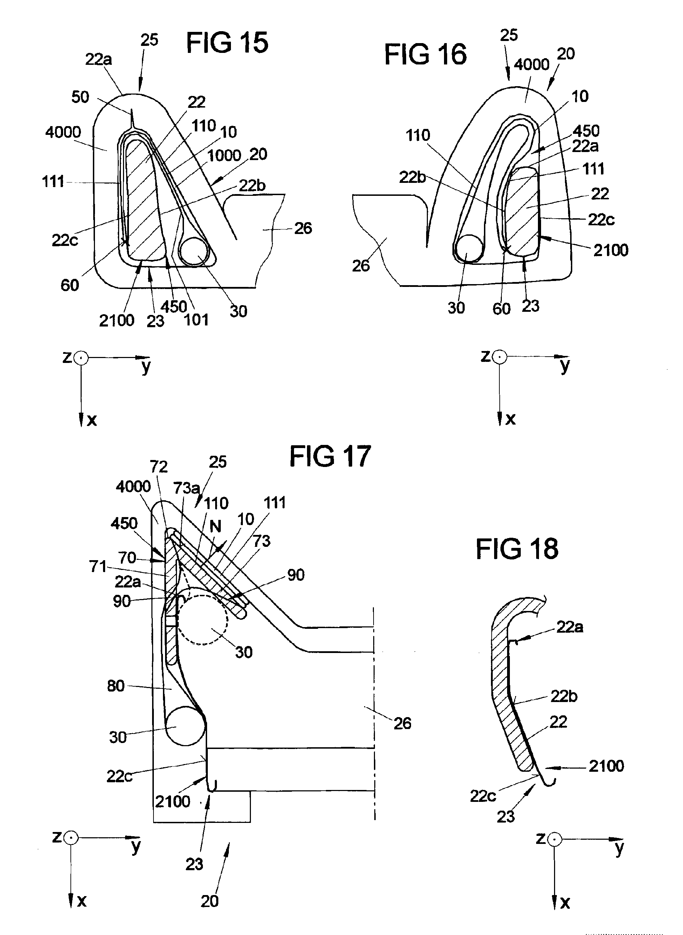

Figur 15 zeigt eine nicht erfindungsgemäße Gassackanordnung mit einem Gassack 10, der an einem entlang der vertikalen Fahrzeugachse z erstreckten Bereich 22 eines Grundkörpers 2100 eines Fahrzeugsitzes 20 angeordnet ist, wobei es sich bei dem Grundkörper 2100 um einen Sitzrahmen des Fahrzeugsitzes 20 handelt und bei jenem Bereich 22 um einen Abschnitt eines Lehnenrahmens 23 des Fahrzeugsitzes 20, der ein Bestandteil des Sitzrahmens 2100 darstellt. Der Lehnenrahmen 23 bildet ein Grundgerüst oder einen Grundkörper zweier Lehnenwangen 25 des Fahrzeugsitzes 20, die entlang der Fahrzeuglängsachse x von einer Rückenlehne 26 abstehen, die sich in der z-y-Ebene erstreckt, wobei die Rückenlehne 26 üblicherweise um eine entlang der Fahrzeugquerachse y verlaufende Achse verschwenkbar (verstellbar) ist. Die vorliegend betrachtete Lehnenwange 25 bietet einem den Fahrzeugsitz belegenden Insassen Halt entlang der Fahrzeugquerachse y und ist benachbart zu einer seitlichen Kraftfahrzeugkarosserie angeordnet. Bei dem Fahrzeugsitz 20 kann es sich natürlich auch um eine Kraftfahrzeugrückbank handeln.

Der Gassack 10 setzt sich zumindest aus einem ersten Gassackteil 1000 und einem zweiten Gassackteil 101 zusammen, die entlang ihrer äußeren umlaufenden Ränder miteinander verbunden sind, z.B. mittels einer Naht. Die beiden Gassackteile 1000, 101 können separat ausgebildet sein oder sind einstückig aneinander angeformt. Im letztgenannten Falle sind die beiden Gassackteile 1000, 101 entlang einer Achse aufeinander gefaltet und die aufeinander liegenden Randabschnitte jener Gassackteile 1000, 101 miteinander verbunden (so genannter Schmetterlingszuschnitt).

Der so ausgeformte Gassack 10 ist um den besagten Bereich 22 des Grundkörpers 2100 - hier ein Lehnenrahmenabschnitt 22 - herumgelegt, so dass der Lehnenrahmenabschnitt 22 entlang der Fahrzeugquerachse y zwischen dem Gassack 10 angeordnet ist. Auf diese Weise ist der Gassack 10 in einen ersten Abschnitt 110 und einen damit verbundenen zweiten Abschnitt 111 unterteilt, wobei der Übergang vom ersten zum zweiten Abschnitt 110, 111 entlang einer Stirnseite 22a des Lehnenrahmenabschnitts 22 verläuft, die der Fahrzeugfront zugewandt ist.

Dabei ist der erste Abschnitt 110 des Gassackes 10 an einer Innenseite 22b des Lehnenrahmensabschnittes 22 angeordnet, die einem den Fahrzeugsitz 20 bestimmungsgemäß belegenden Insassen zugewandt ist. Der zweite Abschnitt 111 des Gassackes 10 hingegen ist an einer der Innenseite 22b abgewandten Außenseite 22c des Lehnenrahmenabschnitts 22 angeordnet.

Zum Aufblasen des Gassackes 10 ist ein im ersten Abschnitt 110 angeordneter Gasgenerator 30 vorgesehen, d.h., der Gasgenerator 30 ist in einem durch den Abschnitt 110 definierten Bereich eines Innenraumes des Gassackes 10 angeordnet, wobei der Gasgenerator 30 sich an der Innenseite 22b entlang des Lehnenrahmenabschnittes 22 erstreckt und an der besagten Innenseite 22b des Lehnenrahmenabschnitts 22 befestigt ist. Über den Gasgenerator 30 ist auch der Gassack 10 an dem Lehnenrahmenabschnitt 22 befestigt, bspw. indem der Gasgenerator 30 einen Bereich des Gassackes 10 gegen den Lehnenrahmenabschnitt 22 drückt.

Der besagte Lehnenrahmenabschnitt 22 ist samt daran festgelegten Gassack 10 und Gasgenerator 30 durch einen Abschnitt 4000 eines Sitzschaums (Sitzschaumabschnitt 4000) des Fahrzeugsitzes 20 umgeben, wobei jener Sitzschaum eine äußere Umhüllung des Grundkörpers 2100 des Fahrzeugsitzes 20 bildet, die mit einem abschließenden Sitzbezug bezogen sein kann. D.h., der Sitzschaumabschnitt 4000 weist eine Ausnehmung 450 auf, in der das Airbagmodul (Gasgenerator 30 und Gassack 10) angeordnet ist.

Damit sich der Gassack 10 im Sitzschaumabschnitt 4000 beim Aufblasen ausdehnen kann, ist an einer der Stirnseite 22a des Lehnenrahmenabschnitts 22 zugewandten Wandung 46 der Ausnehmung 450 des Sitzschaumabschnittes 4000 ein Einschnitt 50 in Form einer Nut vorgesehen, die sich entlang der besagten Stirnseite 22a erstreckt. Der Sitzschaumabschnitt 4000 kann sich somit im Querschnitt - unter Aufklappen jener Nut 50 - ausdehnen, so dass die Ausnehmung 450 des Sitzschaumabschnittes 4000 auch ein infolge des Aufblasens vergrößertes Gassackvolumen aufnehmen kann.

Da der Gassack 10 wie vorstehend beschrieben in die beiden Abschnitte 110, 111 unterteilt ist, wird der zu schützende Insasse durch den Gassack 10 (infolge der Ausdehnung des Sitzschaumabschnittes 4000) von der Innenseite 22b des Lehnenrahmenabschnittes 22 weggedrückt, so dass der Insasse bei einem auf die Außenseite des Lehmenrahmenabschnittes 22 gerichteten Einwirkung auf die Kraftfahrzeugkarosserie aus der Gefahrenzone weg befördert werden kann.

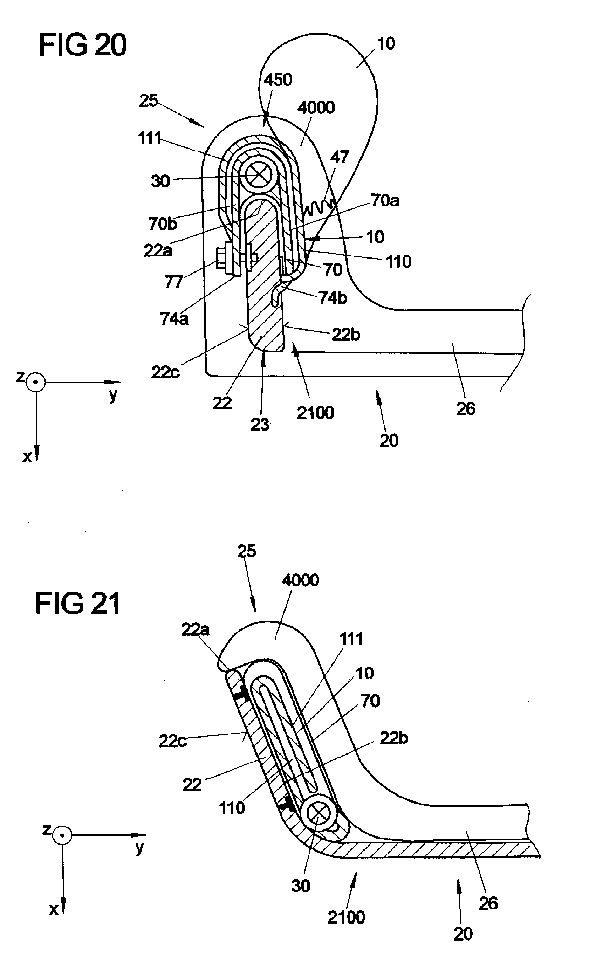

Zu einem späterem Zeitpunkt kann sich eine Verbindung 60 zwischen einem Randbereich 111a des zweiten Abschnittes 111 des Gassackes 10 und der Außenseite 22c des Lehnenrahmenabschnittes infolge des im Gassack herrschenden Druckes lösen, so dass der Gassack sich in der x-z-Ebene entfaltet. Hierbei kann der Gassack ggf. eine Sollbruchstelle 47 des Sitzschaumabschnittes 4000 durchstoßen (vgl. Figur 20).

Figur 16 zeigt eine Abwandlung der in der Figur 15 gezeigten Gassackanordnung, bei der der zweite Abschnitt 111 des Gassackes 10 im Unterschied zur Figur 15 nicht an der Außenseite 22c des Lehnenrahmenabschnitts 22 angeordnet ist, sondern entlang der Fahrzeugquerachse y zwischen dem ersten Abschnitt 110 und dem Lehnenrahmenabschnitt 22. Sowohl bei der Figur 15 als auch bei der Figur 16 erstrecken sich beide Abschnitte 110, 111 vor dem Aufblasen vorzugsweise entlang der x-z-Ebene und weisen vorzugsweise die gleiche Fläche auf.

Des Weiteren ist bei der Figur 16 im Unterschied zur Figur 15 der Randbereich 111 a des zweiten Abschnittes über die Verbindung 60 nicht mit der Außenseite 22b des Lehnenrahmenabschnittes verbunden, sondern mit der Innenseite 22b des Lehnenrahmenabschnittes.

Figur 17 zeigt im Zusammenhang mit der Figur 18 anhand einer schematischen, ausschnitthaften Schnittansicht eine Abwandlung der in den Figuren 15 und 16 gezeigten Gassackanordnung.

Dabei ist im Unterschied zu den Figuren 15 und 16 ein zusätzliches Widerlagerelement 70 vorgesehen, mit einem ersten Teil 71, der sich flächig in der x-z-Ebene erstreckt und über den das Widerlagerelement 70 mit dem Lehnenrahmenabschnitt 22 verbunden ist. Von einer der Fahrzeugfront zugewandten, entlang der vertikalen Fahrzeugachse erstreckten Kante 72 des Widerlagerelementes 70 geht ein zweites Teil 73 des Widerlagerelementes 70 in Richtung auf den zu schützenden Insassen ab, das einstückig an den ersten Teil 71 angeformt ist und sich geneigt zur x-z-Ebene entlang der vertikalen Fahrzeugachse z erstreckt, so dass die besagte Kante 72 bezogen auf die x-y-Ebene spitzwinklig ausgebildet ist. Die vorstehend erwähnten Ebenen (x-z-Ebene und x-y-Ebene) werden durch die Fahrzeuglängsachse x und die vertikale Fahrzeugachse z bzw. durch die Fahrzeuglängsachse x und die Fahrzeugquerachse y aufgespannt. Entsprechend der Figur 18 kann die besagte Kante 72 auch stumpfwinklig ausgeformt werden.

Das Widerlagerelement 70 kann insbesondere einen Träger eines Airbagmoduls bilden, d.h., sowohl der Gassack 10 als auch der Gasgenerator 30 und ggf. der Sitzschaumabschnitt 4000 können an dem Widerlagerelement (Träger) 70 befestigt sein. Über das Widerlagerelement ist dann das gesamte Airbagmodul am Lehnenrahmenabschnitt 22 bzw. dem Bereich 22 festgelegt.

An dem Widerlagerelement 70, und zwar an dessen zweitem Teil 73, kann sich der Gassack 10 beim Aufblasen abstützen und somit den Insassen wirkungsvoll schräg nach vorne zur Fahrzeugfront hin verlagern (es gibt aufgrund der Neigung des zweiten Teils 73 eine Bewegungskomponente entlang der Fahrzeugquerachse y zum Innenraum hin).

Insbesondere ist der erste Teil 71 des Widerlagerelementes 70 an einem näher zur Fahrzeugfront gelegenen, entlang der vertikalen Fahrzeugachse z erstreckten Randbereich 74 des Widerlagerelementes 70 festgelegt, so dass das Widerlagerelement 70 die Stirnseite 22a des Lehnenrahmenabschnitts 22 im Querschnitt umgreift, d.h., die besagte Stirnseite 22a ist entlang der Fahrzeugquerachse y zwischen dem ersten und dem zweiten Teil 71, 73 angeordnet. Der Gasgenerator 30 kann ebenfalls entlang Fahrzeugquerachse y zwischen dem ersten und dem zweiten Teil 71, 73 des Widerlagerelementes 70 angeordnet sein. Dabei kann der Gasgenerator 30 an dem Widerlagerelement 70 und / oder an dem Lehnenrahmenabschnitt 22 befestigt sein. Alternativ hierzu ist der Gasgenerator an der Außenseite 22c des Lehnenrahmenabschnitts 22 angeordnet und dort am Lehnenrahmenabschnitt 22 befestigt.

Der Gassack 10 erstreckt sich vor dem Aufblasen entlang einer dem Insassen zugewandten Oberfläche 73a des zweiten Teils 73 des Widerlagerelementes 70 und ist dabei so umgeschlagen, dass die beiden Abschnitte 110, 111 des Gassackes 10 übereinander und parallel zur besagten Oberfläche 73a angeordnet sind. Dabei ist der zweite Abschnitt 111 vorzugsweise entlang einer Normalen N zur Oberfläche 73a zwischen der besagten Oberfläche 73a und dem ersten Abschnitt 111 angeordnet. D.h., der Gassack liegt über den zweiten Abschnitt 111 an der Oberfläche 73a des Widerlagerelementes 70 an.

Um den Gassack 10 mit Gas befüllen zu können, ist eine Zuleitung 80 vorgesehen, die vorzugsweise aus einem Gassackmaterial gefertigt ist. Die Zuleitung 80 kann ausgehend vom Gasgenerator 30 in den ersten Abschnitt oder den zweiten Abschnitt münden.

Bei einem am Lehnenrahmenabschnitt 22 befestigten Gasgenerator 30 kann die Zuleitung 80 durch eine Durchgangsöffnung 90 des ersten Teils 71 des Widerlagerelementes 70 geführt sein und ggf. durch eine Durchgangsöffnung 90 des zweiten Teiles 72. Es besteht auch die Möglichkeit, die Zuleitung 80 um das Widerlagerelement 70 herumzulegen. Bei einem am Widerlagerelement 70 festgelegten Gasgenerator 30 kann die Zuleitung 80 durch eine Durchgangsöffnung 90 des zweiten Teils 73 geführt sein oder aber um das zweite Teil 73 herum gelegt sein.

Auch bei dem Beispiel gemäß den Figuren 17 und 18 ist ein das Airbagmodul (Gassack, Gasgenerator, Zuleitung und Widerlagerelement) umgebender Sitzschaumabschnitt 4000 vorgesehen (vgl. Figuren 15 und 16).

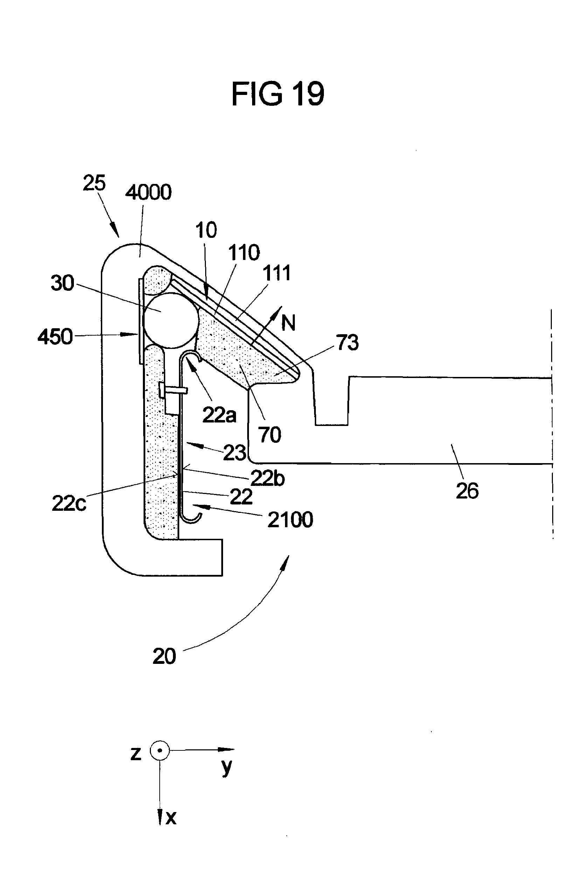

Bei der Gassackanordnung bzw. dem Airbagmodul gemäß Figur 19 wird das zusätzliche Widerlagerelement 70 nicht wie bei den Figuren 17 und 18 durch ein vorzugsweise aus Metall gefertigtes Element gebildet, sondern besteht aus einem Schaum, der jedoch härter als ein umgebender Sitzschaum des Fahrzeugsitzes 20 ausgebildet ist. In diesen Widerlagerschaum kann das Airbagmodul (Gassack, Gasgenerator) auch eingeschäumt werden. Vorzugsweise ist der Gasgenerator 30 am Randbereich 73 des Lehnenrahmenabschnitts 22 befestigt, insbesondere mit einer Schraubverbindung, die von der Innenseite 22b des Lehnenrahmenabschnittes 22 her verschraubt wird, wobei der Gasgenerator 30 selbst an der Stirnseite 22a des Lehnenrahmenabschnittes 22 angeordnet ist. Entsprechend der Figur 17 weist das aus Schaum bestehende Widerlagerelement 70 zumindest das erste Teil 73 auf, über das sich der Gassack 10 - wie vorstehend beschrieben - beim Aufblasen abstützen kann.

Figur 20 zeigt eine Abwandlung der in der Figur 17 gezeigten Gassackanordnung, wobei im Unterschied zur Figur 17 das Widerlagerelement 70 ein Gehäuse für den Gasgenerator 30 bildet, der über das Widerlagerelement 70 am Lehnenrahmenabschnitt 22 befestigt ist, wobei der Gasgenerator an der Stirnseite 22a des Lehnenrahmenabschnitts 22 angeordnet ist und in der x-y-Ebene zumindest von drei Seiten durch das Widerlagerelement 70 umgeben ist. Das Widerlagerelement 70 ist in der besagten Querschnittsebene entsprechend gekrümmt ausgebildet, so dass es die besagte Stirnseite 22a mit dem daran festgelegten Gasgenerator 30 umgreifen kann.

Das Widerlagerelement 70 weist dabei zwei entlang der vertikalen Fahrzeugachse z erstreckte Randbereiche 74a, 74b auf, wobei das Widerlagerelement 70 über einen ersten Randbereich 74a mit der Außenseite 22c des Lehnenrahmenabschnitts 22 und über den zweiten Randbereich 74b mit der Innenseite 22b des Lehnenrahmenabschnitts 22 verbünden ist. Dabei ist das Widerlagerelement 70 über den ersten Randbereich 74a von der Außenseite 22c her mit dem Lehnenrahmenabschnitt 22 verschraubt (über eine Schraube 77, die von der Außenseite 22c des Lehnenrahmenabschnittes 22 her in eine entsprechende Durchgangsöffnung des Lehnenrahmenabschnittes 22 eingeführt wird) und mit dem zweiten Randbereich 74b von der Innenseite 22b her in den Lehnenrahmenabschnitt 22 eingehängt, wobei ein Abschnitt des zweiten Randbereiches 74b einen Bereich des Lehnenrahmenabschnittes 22 hintergreift. Der Gassack 10 selbst ist gemäß der Figur 15 um das Widerlagerelement 70 herumgelegt, so dass der erste Abschnitt 110 an einer dem Insassen zugewandten Innenseite 70a des Widerlagerelementes 70 anliegt und der zweite Abschnitt an einer der Innenseite 70a abgewandten Außenseite 70b des Widerlagerelementes 70.

Dabei ist der Gassack 10 vorzugsweise an der Innenseite 70a des Widerlagerelementes 70 eingehängt und an der Außenseite 70b des Widerlagerelementes 70 über die besagte Schraube 77 am Widerlagerelement 70 festgelegt. Diese Verbindung des zweiten Abschnittes 111 des Gassackes 10 kann dazu ausgelegt sein, beim Aufblasen des Gassackes 10 gelöst zu werden, so dass sich der zweite Abschnitt 111 ggf. entlang der x-z-Ebene entfalten kann.

Auch bei der in der Figur 20 gezeigten Anordnung bildet das Widerlagerelement 70 vorzugsweise einen Träger eines Airbagmoduls, der den Gassack, den Gasgenerator und ggf. den Abschnitt 4000 des Sitzschaums trägt, d.h., diese Komponenten sind an dem Träger befestigt und werden bevorzugt über diesen Träger am Lehnenrahmenabschnitt 22 bzw. Bereich 22 festgelegt.

Die Figur 21 zeigt eine Variante , bei der der Grundkörper 2100 des Fahrzeugsitzes 20 durch eine Sitzschale gebildet ist, die an einer der Fahrzeugfront zugewandten Seite durch einen Sitzschaum bedeckt ist. Hierbei wird jener Bereich 22 des Grundkörpers 2100 durch einen entlang der vertikalen Fahrzeugachse z erstreckten Abschnitt der Sitzschale 2100 gebildet, der ein Teil eines Grundgerüsts für eine Lehnenwange 25 des Fahrzeugsitzes 20 bildet. Diese weist eine dem zu schützenden Insassen zugewandte, entlang der x-z-Ebene erstreckte Innenseite 22a auf, an der das als Gehäuse ausgeformte Widerlagerelement 70 festgelegt ist. Darin sind der Gassack 10 (umgeschlagen nach Art der Figur 16, wobei der mit dem Gasgenerator 30 kommunizierende erste Abschnitt 110 zwischen der Innenseite 22a und dem zweiten Abschnitt 111 des Gassackes 10 angeordnet ist) sowie der im ersten Abschnitt 110 angeordnete Gasgenerator 30 angeordnet. Das als Gehäuse ausgebildete Widerlagerelement 70 wird an einer der Innenseite 22a abgewandten Seite durch einen Sitzschaumabschnitt 4000 bedeckt. Somit bildet das Widerlagerelement 70 einen Träger des Airbagmoduls aus.

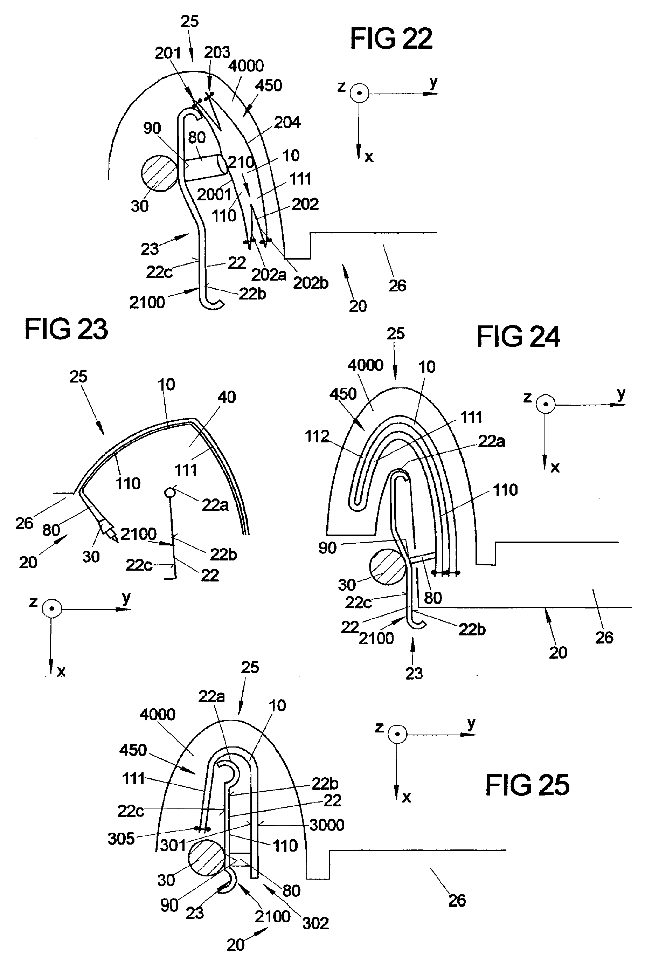

Figur 22 zeigt eine alternative Anordnung bzw. Faltung des Gassackes 10. Hierbei ist der Gasgenerator 30 an der Außenseite 22c des Lehnenrahmenabschnitts 22 angeordnet und mittels einer Zuleitung 80 mit dem Gassack 10 verbunden, der an der Innenseite 22b des Lehnenrahmenabschnitts 22 angeordnet ist, wobei jene Zuleitung 80 durch eine Durchgangsöffnung 90 des Lehnenrahmenabschnitts 22 zum Gassack 10 geführt ist und dort mittig in den ersten Abschnitt 110 des Gassackes 10 mündet, und zwar abseits einer Umfangsnaht 201, über die ein erstes Gassackteil 2001 des ersten Abschnittes 110 des Gassackes 10 mit einem Randbereich 202a eines umlaufenden zweiten Gassackteils 202 verbunden ist. Im nicht aufgeblasenen Zustand des Gassackes 10 erstreckt sich jenes erste Gassackteil 2001 flächig entlang der Innenseite 22b des Lehnenrahmenabschnitts 22. Über eine weitere Umfangsnaht 203, die entlang der ersten Umfangsnaht 201 umläuft, ist jenes zweite Gassackteil 202 über einen weiteren Randbereich 202b des zweiten Gassackteils 202 mit einem dritten Gassackteil 204 verbunden, das sich im nicht aufgeblasenen Zustand des Gassackes 10 ebenfalls flächig entlang der Innenseite 22b des Lehnenrahmenabschnitts 22 erstreckt. Dabei weist das zweite Gassackteil 202 eine umlaufende Falte 210 auf, die entlang der beiden Umfangsnähte 201, 203 umläuft, so dass der Gassack 10 im nicht aufgeblasenen Zustand die Form eines Balges (mit einer Falte) aufweist. Diese Falte 210 unterteilt den Gassack 10 in den ersten und den zweiten Abschnitt 110, 111.

Figur 23 zeigt eine Variante einer nicht erfindungsgemäßen Gassackanordnung bzw. eines nicht erfindungsgemäßen Airbagmoduls, bei der der Gassack 10 im Gegensatz zu den Figuren 15 bis 22 nicht durch einen Sitzschaumabschnitt 4000 verdeckt ist, sondern auf diesem flächig ausgebreitet ist, wobei jener Sitzschaumabschnitt 4000 den Lehnenrahmenabschnitt 22 im Querschnitt umgibt. Entsprechend ist der Gassack 10 um den Lehnenrahmenabschnitt 22 herumgelegt, so dass der erste Abschnitt 110 des Gassackes 10 an der Innenseite 22a des Lehnenrahmenabschnitts 22 angeordnet ist und der zweite Abschnitt 111 an der Außenseite 22b des Lehnenrahmenabschnitts 22. Der Gasgenerator 30 ist an der Innenseite 22b des Lehnenrahmenabschnitts 22 in den Sitzschaumabschnitt 4000 eingebettet und kann dabei insbesondere in jenen Sitzschaumabschnitt 4000 eingeschäumt sein. Hierdurch ist der Gasgenerator 30 bezüglich des Lehnenrahmenabschnitts 22 festgelegt. Der Gasgenerator 30 kann im ersten Abschnitt 110 angeordnet sein. Alternativ hierzu kann eine Zuleitung 80 vorgesehen sein, über die der Gasgenerator 30 mit dem ersten Abschnitt 110 verbunden sein kann.

Figur 24 zeigt eine Abwandlung der in der Figur 22 gezeigten Gassackanordnung, bei der der Gassack 10 im Unterschied zur Figur 22 keine Balgform aufweist, sondern in drei Abschnitte 110, 111 und 112 unterteilt ist, wobei der erste Abschnitt 110, in den die Zuleitung 80 des Gasgenerators 30 mündet, entlang der Innenseite 22b des Lehnenrahmenabschnitts 22 erstreckt ist und entlang der Stirnseite 22a in den zweiten Abschnitt 111 übergeht, der flächig entlang der Außenseite 22c erstreckt ist. Der erste und der zweite Abschnitt 110, 111 des Gassackes 10 sind also um den Lehnenrahmenabschnitt 22 herumgelegt. Der sich an den zweiten Abschnitt 111 einstückig anschließende dritte Abschnitt 112 des Gassackes 10 ist auf den ersten und zweiten Abschnitt 110, 111 umgeschlagen, so dass er den ersten und den zweiten Abschnitt 110, 111 überdeckt.

Demgegenüber ist der Gassack 10 gemäß Figur 25, die eine Abwandlung der in der Figur 24 gezeigten Gassackanordnung zeigt, lediglich gemäß Figur 15 in zwei Abschnitte 110, 111 unterteilt, wobei der Gassack 24 gemäß Figur 25 einen Schmetterlingszuschnitt aufweist. D.h., der Gassack 10 weist ein erstes Gassackteil 3000 und ein zweites Gassackteil 301 auf, die entlang einer Klappachse 302 einstückig aneinander angeformt sind und entlang jener Klappachse 302 aufeinander geklappt sind. Die hierbei aufeinander zu liegen kommenden äußeren Randabschnitte der beiden Gassackteile 3000, 301 sind dabei mittels einer Verbindung 305, insbesondere in Form einer Naht, miteinander verbunden. Die Klappachse 302 verläuft entlang der vertikalen Fahrzeugachse z entlang der Innenseite 22b des Lehnenrahmenabschnitts 22 und liegt dem Gasgenerator 30 entlang der Fahrzeugquerachse y gegenüber.

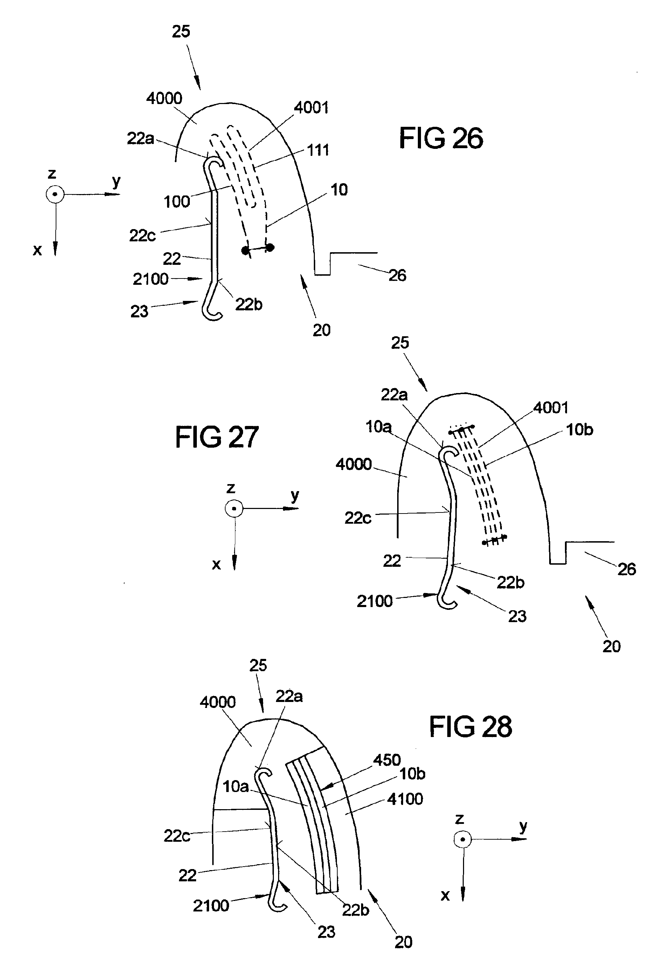

Figur 26 zeigt eine Abwandlung der in der Figur 16 gezeigten Gassackanordnung, bei der der Gassack10 eingeschlagen ist, so dass der erste und der zweite Abschnitt 110, 111 jeweils mit ihren Randbereichen 110a, 111 b, die entlang der vertikalen Fahrzeugachse z erstreckt sind, benachbart zur Stirnseite 22a des Lehnenrahmenabschnitts 22 angeordnet sind.

Der Gassack 10 ist des Weiteren in den umgebenden Sitzschaumabschnitt 4000 eingeschäumt, wobei an dem Gassack 10 eine Mehrzahl an Öffnungen 4001 ausgebildet ist, durch die Schaum beim Einschäumen in einen durch den Gassack 10 definierten Innenraum eindringen kann. Hierdurch wird der Gassack 10 im Sitzschaum verankert.

Auch bei dem Beispiel gemäß Figur 27 sind derartige Öffnungen 4001 vorgesehen, wobei im Unterschied zur Figur 26 zwei separate Gassäcke 10a und 10b vorgesehen sind, die sich im nicht aufgeblasenen Zustand jeweils flächig entlang der Innenseite 22b des Lehnenrahmenabschnitts 22 erstrecken und dabei deckungsgleich übereinander angeordnet sind.

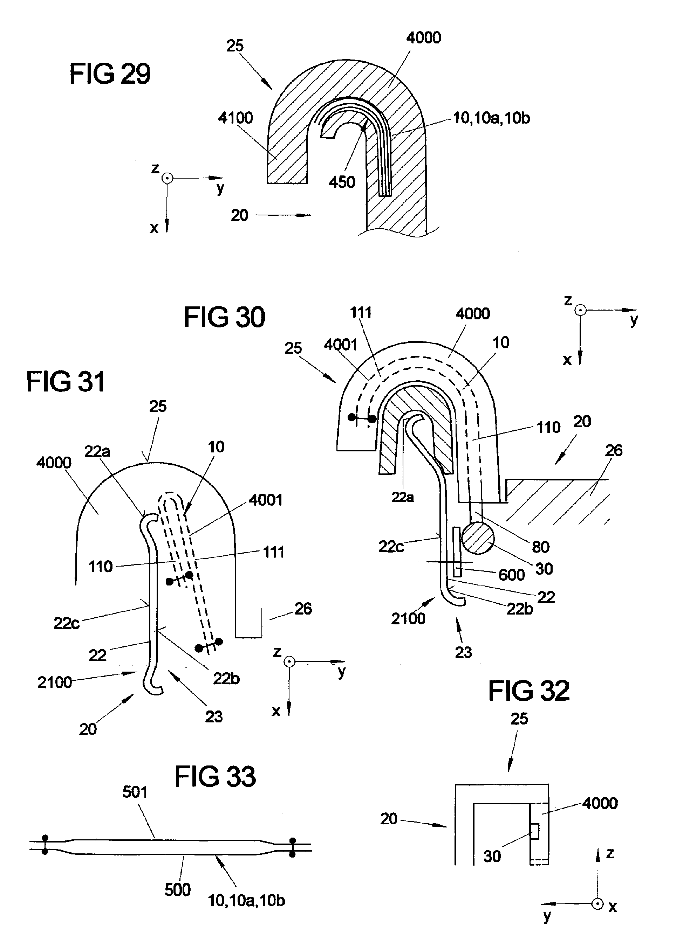

Die Figur 31 zeigt eine Abwandlung der in der Figur 26 gezeigten Gassackanordnung bei der der Gassack 10 im Unterschied zur Figur 26 entsprechend der Figur 16 ausgebildet ist und zusätzlich die anhand der Figur 26 beschriebenen Öffnungen 4001 aufweist.

Alternativ zu den Figuren 26, 27 und 31 können die aufeinander liegenden Gassackteile 500, 501 der dort gezeigten Gassäcke 10, 10a, 10b auch gemäß Figur 33 miteinander und mit dem umgebenden Sitzschaumabschnitt 4000 verklebt werden, um die Gassäcke 10, 10a, 10b bezüglich des Sitzschaums dauerhaft zu positionieren, wobei jene Verklebungen sich lösen, wenn die betreffenden Gassäcke 10, 10a, 10b aufgeblasen werden.

Alternativ zum Einschäumen können die beiden Gassäcke 10a und 10b gemäß Figur 28 auch in einer Ausnehmung 450 des Sitzschaumabschnitts 4000 angeordnet sein, wobei eine Wandung 4100 der Ausnehmung 450 zum Insassen hin einen Durchbruch aufweisen kann, so dass diese die beiden Gassäcke 10a, 10b verdeckende Wandung 4100 beim Aufblasen der Gassäcke 10a, 10b durch die Gassäcke 10a, 10b in Richtung auf den Insassen ausgelenkt werden kann.

Gemäß Figur 29 kann jene Wandung 4100 um den oder die Gassäcke 10, 10a, 10b bzw. um den Lehnenrahmenabschnitt 22 herumgelegt sein, so dass ein verhältnismäßig großer Abschnitt des Sitzschaumabschnitts 4000 in Richtung auf den Insassen klappbar ist. Diese klappbare Wandung 4100 schirmt den Insassen bei einem Seitencrash zusätzlich ab.

Gemäß Figur 30 kann der Sitzschaumabschnitt 4000 gemäß Figur 29 sowie sämtliche vorbeschriebenen Sitzschaumabschnitte 4000 am Airbagmodul (umfassend Gassack 10, 10a, 10b, Gasgenerator 30 sowie ggf. Widerlagerelement 70 bzw. einen Träger oder ein Gehäuse des Airbagmoduls) vorfixiert oder befestigt sein, wobei jener Sitzschaumabschnitt 4000 bei der Montage des Airbagmoduls, die bei den vorstehend beschriebenen Airbagmodulen vorzugsweise frontseitig, d.h., von der Stirnseite 22a des Lehnenrahmenabschnitts 22 her erfolgt, in einer am Sitzschaum des Fahrzeugsitzes vorgesehenen Ausnehmung angeordnet wird. Figur 32 zeigt dies anhand eines schematischen, ausschnitthaften Schnitts durch einen Fahrzeugsitz 20 entlang der y-z-Ebene.

Das Airbagmodul gemäß Figur 30 weist also vorzugsweise den Sitzschaumabschnitt 4000 auf, der den Gassack 10 einhüllt und vorzugsweise so vorgeformt ist, dass der Sitzschaumabschnitt gekrümmt ist und den Lehnenrahmenabschnitt 22 umgreifen kann derart, dass der in dem besagten Abschnitt 4000 verlaufende Gassack 10 entsprechend der Figur 15 um den Lehnenrahmenabschnitt 22 herumgelegt ist, wenn das Airbagmodul am Fahrzeugsitz 20 montiert ist. Aus dem besagten Abschnitt 4000 steht eine Zuleitung 80 entlang der Fahrzeuglängsachse x heraus, die den Gassack 10 (ersten Abschnitt 110) mit dem Gasgenerator 30 verbindet, der zusammen mit dem Sitzschaumabschnitt 4000 und dem Gassack 10 an einem Träger 600 montiert ist, über den das Airbagmodul am Lehnenrahmenabschnitt 22 festgelegt wird. Dabei wird der Gasgenerator 30 an der Innenseite 22b des Lehnenrahmenabschnitts 22 positioniert. Der Träger 600 kann auch entsprechend Figur 20 als Widerlagerelement ausgebildet sein.

### Bezugszeichenliste

- 1: Fahrzeugsitzanordnung
- 2: Fahrzeug
- 3: Fahrzeugsitz
- 4, 4a, 4b: aufblasbares Element
- 5: Fahrzeuginsasse
- 6: Seitengassack
- 7: Polsterung
- 7a, 7b: Teilstück
- 8: Bezug
- 9: Gasgenerator
- 10, 10a, 10b: Gassack
- 20: Fahrzeugsitz
- 21: Fahrzeuglängsseite
- 22: Lehnenrahmenabschnittes
- 22a: Stirnseite
- 22b: Innenseite
- 22c: Außenseite
- 23: Lehnenrahmen
- 25: Lehnenwange
- 26: Rückenlehne
- 30: Gasgenerator
- 31: Rückenlehne
- 40: Mehrkammerelement
- 41: Kammer
- 42: Hüllmaterial
- 45: Befestigungsmittel
- 50: Einschnitt
- 60: Verbindung
- 70: Widerlagerelement
- 71: erstes Teil
- 72: Kante
- 73: zweites Teil
- 74a, 74b: Randbereich
- 80: Zuleitung
- 90: Durchgangsöffnung
- 91: Halter
- 100: Band
- 101: Gassackteil
- 110: erster Abschnitt
- 111: zweiter Abschnitt
- 200: Teil
- 201, 203: Umfangsnaht
- 202: zweites Gassackteil
- 202a: Randabschnitt
- 204: drittes Gassackteil
- 210: Falte
- 300: Band
- 301: zweites Gassackteil
- 302: Klappachse
- 305: Verbindung
- 311: Seitenwange
- 312: Seite
- 313: Rahmen
- 314: Mittelteil
- 400: Verbindung
- 402: Hüllmaterial
- 403: Trennelement
- 600: Träger
- 1000: Gassackteil
- 2001: erstes Gassackteil
- 2100: Grundkörper
- 3000: erstes Gassackteil
- 4000: Sitzschaumabschnitt
- 4001: Öffnung
- 4100: Wandung
- 4500: Ausnehmung
- F: Kraft auf Fahrzeuginsassen
- K: Kraft auf Fahrzeuglängsseite

## Patentansprüche

1. Fahrzeugsitzanordnung für ein Kraftfahrzeug, mit
- einem Fahrzeugsitz (3), der mindestens ein zum Schutz eines auf dem Fahrzeugsitz befindlichen Fahrzeuginsassen (5) aufblasbares Element (4, 4a, 4b) aufweist, wobei
- das aufblasbare Element (4, 4a, 4b) so ausgebildet und angeordnet ist, dass es sich überwiegend in Richtung auf den Fahrzeuginsassen (5) ausdehnt, wenn es aufgeblasen wird,
**dadurch gekennzeichnet, dass**
- das aufblasbare Element (4, 4a, 4b) ungefaltet oder mit nur einer Falte oder einer Stülpung versehen in eine Rückenlehne des Fahrzeugsitzes (3) integriert ist, und
- das aufblasbare Element (4, 4a, 4b) zwischen einer Polsterung (7) des Fahrzeugsitzes (3) und einem Bezug (8) des Fahrzeugsitzes (3) angeordnet ist.

2. Fahrzeugsitzanordnung nach Anspruch 1, **dadurch gekennzeichnet, dass** sich das aufblasbare Element (4, 4a, 4b) im aufgeblasenen Zustand größtenteils zwischen einer Seite (312) des im Fahrzeug eingebauten Fahrzeugsitzes (3), die der dem Fahrzeugsitz näheren Fahrzeuglängsseite (21) zugewandt ist, und dem Fahrzeuginsassen (5) erstreckt.

3. Fahrzeugsitzanordnung nach einem der vorhergehenden Ansprüche, **dadurch gekennzeichnet, dass** das aufblasbare Element (4, 4a, 4b) so ausgebildet und angeordnet ist, dass es, während es sich ausdehnt, eine Kraft (F) auf den Fahrzeuginsassen (5) ausübt, die ihn von einer Fahrzeugseite (21) des Fahrzeugs weg bewegt.

4. Fahrzeugsitzanordnung nach Anspruch 3, **dadurch gekennzeichnet, dass** das aufblasbare Element (4, 4a, 4b) ausgebildet ist, die Kraft (F) auf den Fahrzeuginsassen (5) auszuüben, bevor es in Kontakt mit einem in den Fahrzeuginnenraum intrudierenden Abschnitt der Fahrzeugseitenstruktur (21) kommt.

5. Fahrzeugsitzanordnung nach einem der vorhergehenden Ansprüche, **gekennzeichnet durch** Mittel zum Dämpfen eines Aufpralls der Fahrzeuginsassen und/oder einer Fahrzeugstruktur auf das aufblasbare Element (4, 4a, 4b).

6. Fahrzeugsitzanordnung nach Anspruch 4 und 5, **dadurch gekennzeichnet, dass**
- das aufblasbare Element (4, 4a, 4b) ausgebildet ist, in einer ersten Phase des Ausdehnens die Kraft (F) auf den Fahrzeuginsassen auszuüben; und
- die Mittel zum Dämpfen eines Aufpralls ausgebildet sind, erst während einer nachfolgenden, zweiten Phase des Ausdehnens des aufblasbaren Elementes (4, 4a, 4b) aktiviert zu werden.

7. Fahrzeugsitzanordnung nach einem der vorhergehenden Ansprüche, **dadurch gekennzeichnet, dass** mindestens zwei aufblasbare Elemente im eingebauten Zustand des Fahrzeugsitzes (3) entlang der Fahrzeughöhenrichtung übereinander und/oder mindestens zwei aufblasbare Elemente quer zur Fahrzeuglängsrichtung nebeneinander angeordnet sind.

8. Fahrzeugsitzanordnung nach einem der vorhergehenden Ansprüche, **gekennzeichnet durch** eine Mehrzahl von aufblasbaren Elementen (4a, 4b), die jeweils in Form einer Kammer eines Mehrkammerelementes (40) ausgebildet sind.

9. Fahrzeugsitzanordnung nach einem der vorhergehenden Ansprüche, **dadurch gekennzeichnet, dass** das aufblasbare Element (4, 4a, 4b) an oder in einem Abschnitt einer Seitenwange (311) des Fahrzeugsitzes (3) angeordnet ist, der dem Fahrzeuginsassen (5) zugewandt ist.

10. Fahrzeugsitzanordnung nach einem der vorhergehenden Ansprüche, **dadurch gekennzeichnet, dass** das aufblasbare Element (4, 4a, 4b) an der Polsterung (7) und/oder an dem Bezug (8) festgelegt ist.

11. Fahrzeugsitzanordnung nach einem der vorhergehenden Ansprüche, **gekennzeichnet durch** Befestigungsmittel (100), über die das aufblasbare Element so an einer Struktur (200) des Fahrzeugsitzes (3) befestigt ist, dass die Richtung des Ausdehnens des aufblasbaren Elementes beeinflusst wird.

12. Fahrzeugsitzanordnung nach einem der vorhergehenden Ansprüche, **gekennzeichnet durch**
- ein Hüllmaterial (42), das eine Kammer (41) des aufblasbaren Elementes (4, 4a, 4b) begrenzt; und
- mindestes einem Verbindungselement (300), das zwei Abschnitte einer Innenseite des Hüllmaterials (42) so miteinander verbindet, dass die Richtung des Ausdehnens des aufblasbaren Elementes (4, 4a, 4b) beeinflusst wird.

13. Fahrzeugsitzanordnung nach einem der vorhergehenden Ansprüche, **gekennzeichnet durch** einen Gassack (6), der sich im entfalteten Zustand größtenteils zwischen einer Fahrzeuglängsseite (21) und dem Fahrzeugsitz (3) erstreckt.

14. Fahrzeugsitzanordnung nach einem der vorhergehenden Ansprüche, **dadurch gekennzeichnet, dass** sich das aufblasbare Element (4, 4a, 4b) im unaufgeblasenen Zustand flach erstreckt.

15. Verfahren zum Schützen eines Fahrzeuginsassen, mit den Schritten:
- Bereitstellen eines Fahrzeugsitzes (3), das ein aufblasbares Element (4, 4a, 4b) aufweist, das ungefaltet oder mit nur einer Falte oder einer Stülpung versehen in eine Rückenlehne des Fahrzeugsitzes integriert ist;
- Anordnen und Aufblasen des aufblasbaren Elementes (4, 4a, 4b) derart, dass es sich überwiegend in Richtung auf den Fahrzeuginsassen (5) ausdehnt, wobei
- das aufblasbare Element (4, 4a, 4b) zwischen einer Polsterung (7) des Fahrzeugsitzes (3) und einem Bezug (8) des Fahrzeugsitzes (3) angeordnet ist.

## Claims

1. Vehicle seat arrangement for a motor vehicle comprising
- a vehicle seat (3) which comprises at least one element (4, 4a, 4b) being inflatable for protecting a vehicle occupant (5) residing on the vehicle seat, wherein
- the inflatable element (4, 4a, 4b) is formed and arranged such that said element expands predominantly in direction towards the vehicle occupant (5) when being inflated,
**characterized in that**
- the inflatable element (4, 4a, 4b) is integrated in a backrest of the vehicle seat (3) unfolded or provided only with one fold or one inversion, and
- the inflatable element (4, 4a, 4b) is arranged between a cushion (7) of the vehicle seat (3) and a cover (8) of the vehicle seat (3).

2. Vehicle seat arrangement according to claim 1, **characterized in that** the inflatable element (4, 4a, 4b) extends in the inflated status largely between a side (312) of the vehicle seat (3) built into the vehicle, wherein said side faces the vehicle longitudinal side (21) being closer to the vehicle seat ,and the vehicle occupant (5).

3. Vehicle seat arrangement according to one of the preceding claims, **characterized in that** the inflatable element (4, 4a, 4b) is formed and arranged such that while expanding said element exerts a force (F) onto the vehicle occupant (5) which moves the occupant away from a vehicle side (21) of the vehicle.

4. Vehicle seat arrangement according to claim 3, **characterized in that** the inflatable element (4, 4a, 4b) is formed for exerting the force (F) onto the vehicle occupant (5) before said element comes in contact with a section of the vehicle side structure (21), intruding into the vehicle interior space.

5. Vehicle seat arrangement according to one of the preceding claims, **characterized by** means for damping a collision of the vehicle occupants and/or a vehicle structure onto the inflatable element (4, 4a, 4b).

6. Vehicle seat arrangement according to claim 4 and 5, **characterized in that**
- the inflatable element (4, 4a, 4b) is formed for exerting the force (F) onto the vehicle occupant in a first phase of the expansion; and
- the means for damping a collision are formed to be activated only during a subsequent, second phase of the expansion of the inflatable element (4, 4a, 4b).

7. Vehicle seat arrangement according to one of the preceding claims, **characterized in that** at least two inflatable elements are arranged in the assembled status of the vehicle seat (3) above each other along the vehicle height direction and/or at least two inflatable elements are arranged side by side transverse to the vehicle longitudinal direction.

8. Vehicle seat arrangement according to one of the preceding claims, **characterized by** a plurality of inflatable elements (4a, 4b), wherein said elements being formed in each case in form of a chamber of a multiple chamber element (40).

9. Vehicle seat arrangement according to one of the preceding claims, **characterized in that** the inflatable element (4, 4a, 4b) is arranged at or in a section of a side cheek (311) of the vehicle seat (3), wherein said section faces the vehicle occupant (5).

10. Vehicle seat arrangement according to one of the preceding claims, **characterized in that** the inflatable element (4, 4a, 4b) is fixed on the cushion (7) and/or on the cover (8).

11. Vehicle seat arrangement according to one of the preceding claims, **characterized by** fastening means (100) via which the inflatable element is fastened to a structure (200) of the vehicle seat (3) such that the direction of expanding the inflatable element is influenced.

12. Vehicle seat arrangement according to one of the preceding claims, **characterized by**
- a wrapping material (42), which delimits a chamber (41) of the inflatable element (4, 4a, 4b); and
- at least one connecting element (300), which connects two sections of the internal side of the wrapping material (42) with each other such that the direction of the expansion of the inflatable element (4, 4a, 4b) is influenced.

13. Vehicle seat arrangement according to one of the preceding claims **characterized by** an airbag (6) which extends in the unfolded status largely between a vehicle longitudinal side (21) and the vehicle seat (3).

14. Vehicle seat arrangement according to one of the preceding claims **characterized in that** the inflatable element (4, 4a, 4b) extends flat in the unfolded status.

15. Method for protecting a vehicle occupant comprising the steps of:
- providing a vehicle seat (3) comprising an inflatable element (4, 4a, 4b), said element is integrated in a backrest of the vehicle seat unfolded or only provided with one fold or one inversion;
- arranging and inflating the inflatable element (4, 4a, 4b) such that it expands predominantly in direction towards the vehicle occupant (5), wherein
- the inflatable element (4, 4a, 4b) is arranged between a cushion (7) of the vehicle seat (3) and a cover (8) of the vehicle seat (3).

## Revendications

1. Arrangement de siège de véhicule pour un véhicule automobile avec :
- un siège de véhicule (3) qui présente au moins un élément (4, 4a, 4b) gonflable pour la protection d'un occupant de véhicule (5) se trouvant sur le siège de véhicule,
- l'élément gonflable (4, 4a, 4b) étant réalisé et disposé de sorte à se dilater principalement en direction de l'occupant de véhicule (5) quand il est gonflé, **caractérisé en ce que**
- l'élément gonflable (4, 4a, 4b) est intégré en étant déplié ou pourvu seulement d'un pli ou d'un retournement dans un dossier du siège de véhicule (3) et
- l'élément gonflable (4, 4a, 4b) est disposé entre un rembourrage (7) du siège de véhicule (3) et un revêtement (8) du siège de véhicule (3).

2. Arrangement de siège de véhicule selon la revendication 1, **caractérisé en ce que** l'élément gonflable (4, 4a, 4b) s'étend à l'état gonflé principalement entre un côté (312) du siège de véhicule (3) intégré dans le véhicule, qui est tourné vers le côté longitudinal du véhicule (21) plus près du siège de véhicule, et l'occupant du véhicule (5).

3. Arrangement de siège de véhicule selon l'une quelconque des revendications précédentes, **caractérisé en ce que** l'élément gonflable (4, 4a, 4b) est réalisé et disposé de sorte à exercer, lorsqu'il se dilate, une force (F) sur l'occupant du véhicule (5) qui l'éloigne d'un côté (21) du véhicule.

4. Arrangement de siège de véhicule selon la revendication 3, **caractérisé en ce que** l'élément gonflable (4, 4a, 4b) est réalisé afin d'exercer la force (F) sur l'occupant du véhicule (5) avant qu'il n'entre en contact avec une section s'introduisant dans l'habitacle du véhicule de la structure latérale du véhicule (21).

5. Arrangement de siège de véhicule selon l'une quelconque des revendications précédentes, **caractérisé par** des moyens pour l'amortissement d'un choc des occupants de véhicule et/ou d'une structure du véhicule sur l'élément gonflable (4, 4a, 4b).

6. Arrangement de siège de véhicule selon les revendications 4 et 5, **caractérisé en ce que**
- l'élément gonflable (4, 4a, 4b) est réalisé afin d'exercer dans une première phase de dilatation la force (F) sur l'occupant du véhicule (5) et
- les moyens pour l'amortissement d'un choc sont réalisés afin d'être activés seulement pendant une seconde phase consécutive de dilatation de l'élément gonflable (4, 4a, 4b).

7. Arrangement de siège de véhicule selon l'une quelconque des revendications précédentes, **caractérisé en ce qu'**au moins deux éléments gonflables sont disposés à l'état intégré du siège de véhicule (3) le long du sens vertical de véhicule l'un au-dessus de l'autre et/ou au moins deux éléments gonflables sont disposés l'un à côté de l'autre transversalement au sens longitudinal du véhicule.

8. Arrangement de siège de véhicule selon l'une quelconque des revendications précédentes, **caractérisé par** une pluralité d'éléments gonflables (4a, 4b) qui sont réalisés respectivement sous la forme d'une chambre d'un élément à plusieurs chambres (40).

9. Arrangement de siège de véhicule selon l'une quelconque des revendications précédentes, **caractérisé en ce que** l'élément gonflable (4, 4a, 4b) est disposé sur ou dans une section d'une joue latérale (311) du siège de véhicule (3) qui est tournée vers l'occupant du véhicule (5).

10. Arrangement de siège de véhicule selon l'une quelconque des revendications précédentes, **caractérisé en ce que** l'élément gonflable (4, 4a, 4b) est fixé sur le rembourrage (7) et/ou sur le revêtement (8).

11. Arrangement de siège de véhicule selon l'une quelconque des revendications précédentes, **caractérisé par** des moyens de fixation (100), par lesquels l'élément gonflable est fixé sur une structure (200) du siège de véhicule (3) de sorte que la direction de dilatation de l'élément gonflable soit influencée.

12. Arrangement de siège de véhicule selon l'une quelconque des revendications précédentes, **caractérisé par**
- un matériau enveloppant (42) qui délimite une chambre (41) de l'élément gonflable (4, 4a, 4b) ; et
- au moins un élément de liaison (300) qui relie entre elles deux sections d'un côté intérieur du matériau enveloppant (42) de sorte que la direction de dilatation de l'élément gonflable (4, 4a, 4b) soit influencée.

13. Arrangement de siège de véhicule selon l'une quelconque des revendications précédentes, **caractérisé par** un sac gonflable (6) qui s'étend à l'état déplié principalement entre un côté longitudinal de véhicule (21) et le siège de véhicule (3).

14. Arrangement de siège de véhicule selon l'une quelconque des revendications précédentes, **caractérisé en ce que** l'élément gonflable (4, 4a, 4a) s'étend à plat à l'état non gonflé.

15. Procédé de protection d'un occupant de véhicule, avec les étapes suivantes :
- mettre à disposition un siège de véhicule (3) qui présente un élément gonflable (4, 4a, 4b) qui est intégré en étant déplié ou pourvu seulement d'un pli ou d'un retournement dans un dossier du siège de véhicule ;
- disposer et gonfler l'élément gonflable (4, 4a, 4b) de telle manière qu'il se dilate principalement en direction de l'occupant de véhicule (5),
- l'élément gonflable (4, 4a, 4b) étant disposé entre un rembourrage (7) du siège de véhicule (3) et un revêtement (8) du siège de véhicule (3).
